# EUROPÄISCHE PATENTSCHRIFT

(11) **EP 2 906 473 B1**
(45) Veröffentlichungstag und Bekanntmachung des Hinweises auf die Patenterteilung: **13.12.2017**
(21) Anmeldenummer: 13776958.4
(22) Anmeldetag: 02.10.2013
(51) Int. Cl.: B65B 25/00, B65B 65/00, A23G 7/00, B65B 37/16, B65B 11/32

(54) **HOCHLEISTUNGS-VERPACKUNGSVERFAHREN ZUR VERPACKUNG VON, INSBESONDERE KLEINSTÜCKIGEN, PRODUKTEN UND HOCHLEISTUNGS-VERPACKUNGSEINRICHTUNG, INSBESONDERE ZUR DURCHFÜHRUNG DES VERFAHRENS**
HIGH-PERFORMANCE PACKAGING METHOD FOR PACKAGING, IN PARTICULAR SMALL-SIZED, PRODUCTS, AND HIGH-PERFORMANCE PACKAGING DEVICE, IN PARTICULAR FOR PERFORMING THE METHOD
PROCÉDÉ D'EMBALLAGE HAUTE PERFORMANCE PERMETTANT D'EMBALLER DES PRODUITS, EN PARTICULIER DES PRODUITS DE PETITE DIMENSION, ET DISPOSITIF D'EMBALLAGE HAUTE PERFORMANCE PERMETTANT EN PARTICULIER DE METTRE EN OEUVRE LEDIT PROCÉDÉ

(30) Priorität: 11.10.2012 DE 102012019909
(43) Veröffentlichungstag der Anmeldung: 19.08.2015
(60) Teilanmeldung: 17196003.2
(73) Patentinhaber: THEEGARTEN-PACTEC GMBH & CO. KG, 01237 Dresden (DE)
(72) Erfinder: FÖRSTER, Bodo, 01768 Glashütte (DE); WEHNER, Gert, 01328 Dresden (DE); OEHLERT, Volker, 01809 Dohna/Röhrsdorf (DE)
(74) Vertreter: Grünecker Patent- und Rechtsanwälte PartG mbB
(86) Internationale Anmeldenummer: PCT/EP2013/002977
(87) Internationale Veröffentlichungsnummer: WO 2014/056589

(56) Entgegenhaltungen:
- EP-A1- 0 608 824
- EP-A1- 1 772 383
- EP-A1- 1 981 762
- EP-A1- 2 090 511
- EP-A2- 0 268 917
- EP-A2- 2 277 782
- DE-A1- 4 332 810
- DE-A1- 10 309 082
- DE-B- 1 202 211
- DE-C1- 3 931 309
- DE-U1- 29 900 011
- FR-A- 1 189 755
- FR-E- 77 508

## Beschreibung

Die Erfindung betrifft ein Hochleistungs-Verpackungsverfahren zur Verpackung von, insbesondere kleinstückigen, Produkten, vorzugsweise Süßwaren ***wie Hart-*** oder Weichkaramellen, Pralinen oder dergleichen, und eine Hochleistungs-Verpackungseinrichtung, insbesondere zur Durchführung des Verfahrens. ***Sie betrifft ferner eine*** Hochleistungs-Verpackungsmaschine ***mit zumindest einer vorgenannten Hochleistungs-Verpackungseinrichtung sowie eine*** Verpackungsmaschinenanordnung ***mit zumindest einer vorgenannten-Verpackungsmaschinenanordnung.***

***Die*** WO 2007/076910 A1 ***offenbart eine mehrreihige Maschine zum Verpacken von Produkten mit einer Vielzahl von Verpackungslinien oder -reihen, die parallel und koplanar zueinander ausgerichtet sind. Für jede Verpackungsreihe der Vielzahl von Reihen sind getrennte und unterschiedliche Einrichtungen zum Befördern der Produkte von einer Eingangsstation zu einer Ausgangsstation, getrennte und unterschiedliche Einrichtungen zum Zuführen der entsprechenden Verpackungsfolie und getrennte und unterschiedliche Einrichtungen zum Verpacken des Produkts vorhanden.***

Auf dem Gebiet der, insbesondere nach dem kontinuierlichen Prinzip arbeitenden Hochleistungs-Verpackungsmaschinen für kleinstückige Produkte, wie Süßwaren, die, je nach Produkt und gewünschtem Erscheinungsbild in einer Vielzahl unterschiedlicher Faltungen, wie z.B. Päckchen-, Brief- oder Säckchenfaltung oder z. B. Verpackungen mit einem Dreheinschlag oder einem Doppeldreheinschlag, verpackt werden, geht das Bestreben einerseits nach raschem Formatwechsel bzw. einfache Umrüstbarkeit auf unterschiedliche Faltungsarten, andererseits auf höhere Leistungen. Diese liegen derzeit im Bereich von 1500 bis 2000 verpackten Artikeln pro Minute.

Derartige Lösungen sind z. B. mit unterschiedlichen Konfigurationen entsprechender Verpackungsmaschinen aus der DE 10 2008 019 605 A1 oder auch der DE 10 2005 017 329 A1 der Anmelderin bekannt.

Weiteren Leistungserhöhungen sind bei diesen schnell laufenden Maschinen Grenzen gesetzt, bedingt durch Massenkräfte rotierender Massen, eine präzise Synchronisation von Produktzuführung und -vereinzelung und Packmittelzufuhr, der Ableitung der Steuerungsbewegungen für die die Produkte klemmenden Haltebackenpaare, Haltemittel-Klemmeinrichtungen wie Packmittelzangen und der Steuerung der Verpackungsorgane selbst, in der Regel auf der Grundlage stehender Achsen und rotierender Nockenfolger.

Der Erfindung liegt daher die Aufgabe zugrunde, ein Hochleistungs-Verpackungsverfahren zur Verpackung von, insbesondere kleinstückigen, ***Produkten anzugeben,*** das eine wesentliche Steigerung der Verpackungsleistung, insbesondere auf dem Gebiet kontinuierlich arbeitender Verpackungsmaschinen, ermöglicht. Ferner soll eine Hochleistungs-Verpackungseinrichtung, insbesondere zur Durchführung des Verfahrens, und eine Verpackungsmaschine mit zumindest einer derartigen Verpackungseinrichtung sowie eine Verpackungsmaschinenanordnung mit zumindest einer derartigen Verpackungsmaschine bereitgestellt werden.

Diese Aufgabe wird hinsichtlich des Hochleistungs-Verpackungsverfahrens erfindungsgemäß durch die Merkmale des Anspruches 1, hinsichtlich der Hochleistungs-Verpackungseinrichtung erfindungsgemäß durch die Merkmale des Anspruches 17, hinsichtlich der Hochleistungs-Verpackungsmaschine durch Anspruch 30 und hinsichtlich der Hochleistungs-Verpackungsmaschinenanordnung durch Anspruch 31 gelöst. Bevorzugte Ausgestaltungen der Erfindung sind Gegenstand der Unteransprüche.

Das neue Hochleistungs-Verpackungsverfahren zeichnet sich dadurch aus, dass eine Mehrzahl von Prodüktströmen durch die Verpackungseinrichtung geführt wird und zwar vorzugsweise parallel, vorzugsweise gleichzeitig und vorzugsweise in übereinstimmender Zuführungsrichtung.

Es wird also nicht, wie bisher, ein Produktstrom durch eine Verpackungsmaschine bzw. Verpackungseinrichtung geführt, die insbesondere eine nach dem kontinuierlichen Prinzip ist, bei der die Produkte vermittels zumindest einem, üblicherweise vermittels einer Mehrzahl rotierender Köpfe verpackt werden, sondern nach der vorliegenden Erfindung zumindest ein Paar, vorzugsweise wenigstens teilweise paralleler Produktströme, so dass sich die Verpackungsleistung bisheriger Verpackungsmaschinen verdoppelt bzw. in Abhängigkeit von der Anzahl der Produktströme die vorzugsweise gleichzeitig und vorzugsweise im Wesentlichen parallel durch die Hochleistungs-Verpackungseinrichtung führbar sind, vervielfacht.

Es können also auch mehr als zwei Produktströme durch die Verpackungseinrichtung hindurchgeführt und verpackt werden. Insbesondere in Verbindung mit unterschiedlichen Zuführungsprinzipien, z. B. Entnahme aus Vereinzelungsteller oder lineare Zuführung aus Zuführungsband oder -kette, aber auch bei übereinstimmender Zuführung kann auch eine Zusammenführung von Produktströmen oder deren Auftrennung oder die Überführung einzelner Artikel eines Produktstroms in einen anderen Produktstrom vorgesehen sein, insbesondere bei Kombination einer getakteten, diskontinuierlichen Verfahrensführung mit einer kontinuierlichen Verfahrensführung und/oder der Zusammenordnung mehrerer Verpackungseinrichtungen in einer oder mehreren Verpackungsmaschinen oder Verpackungsmaschinenanordnungen.

Dabei ist dieses Hochleistungs-Verpackungsverfahren vollständig unabhängig von der gewählten Faltungsart für die Produktverpackung oder von der Anzahl der im Rahmen des bevorzugten, kontinuierlichen Prinzips verwendeten Köpfe oder Räder. D.h. erfindungsgemäß kann das Prinzip für eine Einkopf- oder Zweikopfmaschine ebenso wie für eine Drei- oder Mehrkopfmaschine verwendet werden (und zwar mit unterschiedlicher Zahl von Köpfen auch für jeden Produktstrom), wobei insbesondere ein rotierendes Entnahmerad mit einer Mehrzahl von Sätzen von Entnahmeeinheiten von denen jeder Satz einem Produktstrom zugeordnet ist oder eine Mehrzahl von Entnahmerädern mit jeweils einem Satz von Entnahmeeinheiten, zugeordnet einem Produktstrom, vorgesehen sind.

Entsprechend sind in den weiteren Prozessschritten für jeden Produktstrom die erforderlichen Produkt/Packstoff-Halteelemente vorgesehen, also bei Verwendung einer Übergabevorrichtung (Greiferrad) für jeden Produktstrom entsprechende Haltebackenpaare mit diesen zugeordneten Packstoff-Klemmeinrichtungen bzw. Sätze von Verpackungseinheiten in der nachgeordneten Packvorrichtung für jeden Produktstrom, so dass in jeder Verfahrensstufe eine Mehrzahl von Produkten parallel, vorzugsweise in gleicher Weise gefördert bzw. verpackt wird. Die Produktströme sind vorzugsweise gleichartig. Es können diese aber auch aus unterschiedlichen Produkten gebildet werden, die in verschiedenen Verpackungsverfahren, Falt- oder Einschlagarten verpackt werden.

Innerhalb einer Verpackungseinrichtung können die Produkte eines Produktstromes intermittierend und diejenigen eines anderen Produktstromes kontinuierlich, vorzugsweise gleichzeitig, verpackt werden. Vorzugsweise kann dabei auch eine nach dem kontinuierlichen Prinzip (kontinuierlicher Produktdurchlauf) arbeitende Verpackungseinrichtung mit einer diskontinuierlich arbeitenden VerpackungseinrichtungNerpackungsmaschine in Linie verkettet sein.

Durch die Erfindung kann generell leistungssteigernd eine Kombination kontinuierlicher leitender Verpackungseinrichtungen mit diskontinuierlich leitenden Aggregaten sowohl für sämtliche mehrbahnigen Produktströme auch nur für einen Teil von ihnen vorgesehen werden. Die intermittierenden Aggregate können beispielsweise Umverpackungseinrichtungen, Stapelpacker mit Anstapelvorrichtungen, Verschlusseinrichtungen, wie Längs- oder Quersiegeleinrichtungen, insbesondere auf thermischer oder Ultraschallbasis, vorzugsweise für das Siegeln von Flossen von Schlauchbeutelverpackungen oder dergleichen, oder auch Endverschlusseinrichtungen (Kalt- oder Heißsiegeln) oder auch klebergestütztes Haftverbinden (Verschließen) von Packstoffen, ggf. auch mittels Ultraschall sein. Die mehrbahnige, vorzugsweise gleichzeitig-parallele Verarbeitung von zumindest zwei Produktströmen führt zur drastischen Leistungssteigerung hinsichtlich der Bereitstellung von endverpackten Produkten, seien es Einzelprodukte oder zu Sammelverpackungen vereinigter Produkte, wie z. B. verpackte Kaugummistreifen.

Vorzugsweise wird der Packstoff entweder in die Entnahmevorrichtung oder die Übergabevorrichtung im Wesentlichen radial eingeführt und zwar entweder unter Klemmen eines vorauslaufenden Endes des Packstoffbandes und Abtrennen eines Packstoffstückes oder unter vorheriger Abtrennung eines Packstoffstückes und Zuführung desselben in das betreffende Entnahmerad oder ein nachgeordnetes Greiferrad oder einem anderen Kopf einer Verpackungseinrichtung.

Als Produkt- und/oder -Packstoffhaltemittel kommen neben mechanischen Packmittelzangen, insbesondere in Verbindung mit Produkt-Haltemitteln auch Vakuumdüsen oder dergleichen unterdruckgesteuerte Halteorgane, ggf. auch in Kombination miteinander in Betracht.

Vorzugsweise schließt sich an eine Packvorrichtung mit den jeweiligen Sätzen von Verpackungseinheiten pro Produktstrom ein Abgaberad an, mit dem die, vorzugsweise parallel geführten, Produkte zu einer Kühl- oder Temperierstrecke als Konditioniereinrichtung geführt werden, um z.B. die Stirnseiten der Verpackung heiß oder kalt anzusiegeln, um auf diese Weise eine hinreichend dichte, ggf. auch geruchs- oder aromadichte Verpackung auszubilden.

Auf diese Weise wird ein vorzugsweise zweibahniges aber gegebenenfalls auch mehrbahniges Verpackungssystem geschaffen, bei dem z.B. auch eine Zuführung der Produkte vom Strang (kontinuierlicher Massestrang) erfolgen kann, wobei die parallel in Richtung Entnahmerad/Entnahmeräder geführte Massestränge stromauf der Entnahmevorrichtung durch z.B. rechtwinklig zu den Massesträngen rotierende Messer getrennt und vereinzelte Produkte hergestellt werden, die anschließend von den entsprechenden Sätzen Entnahmeeinheiten, zugeordnet zu dem jeweiligen Produktstrom, entnommen bzw. aufgenommen werden.

Als Vereinzelungseinrichtung kann stromauf der Entnahmevorrichtung auch ein Vereinzelungsteller vorgesehen sein (oder eine Mehrzahl von Vereinzelungstellern) aus denen eine oder mehrere Längsfördereinrichtungen zur Ausbildung der Produktströme gespeist werden.

Durch die Erfindung ist eine Vervielfachung der Kapazität und des Leistungsvermögens derartiger, insbesondere auf der Basis des kontinuierlichen Prinzips arbeitender Verpackungsmaschinen, bei dem die Produkte kontinuierlich durch eine Verpackungseinrichtung hindurchgeführt werden, möglich. Das erfindungsgemäße Verpackungsverfahren kann aber auch auf intermittierend arbeitende Maschinen unter vorzugsweise Parallelführung mehrere Produktströme und Anordnung der entsprechenden Produkthalte- und Transportelemente sowie Packstoffhalteelemente pro Produktstrom oder in einer Kombination beider Verpackungsprinzipien (kontinuierlich/intermittierend) für die Mehrzahl der Produktströme angewandt werden.
Es ist also überdies auch möglich, die beiden Arbeitsprinzipien (kontinuierlich, intermittierend) für die Mehrzahl von Produktströmen miteinander zu kombinieren, d.h. die Produkte eines Produktstroms kontinuierlich und die Produkte eines anderen Produktstroms intermittierend zu verpacken. Dies auch mit unterschiedlichen Produkten und Faltungsarten für die Produktströme kombiniert werden.
Es kann auch die Verarbeitung der Produktströme und die Verpackungsstrategie innerhalb der Verpackungsmaschine für unterschiedliche Produktströme verschieden sein, d.h. ein Verpackungsstrom über z.B. nur zwei artikeltragende Köpfe (Entnahmevorrichtung, Packvorrichtung) verpackt werden, während die Produkte eines weiteren Produktstroms über drei oder mehr artikeltragende Köpfe verpackt werden. Sowohl hinsichtlich der Kombination von - gleichzeitiger - intermittierender und kontinuierlicher Verpackung, als auch bei einer produktstromspezifischen Verpackungsstrategie (z.B. "2-Kopf-Prinzip"; "3-Kopf-Prinzip") sind die Produkt- und Packmittelhalteorgane wie auch gegebenenfalls die Packstoffzuführung für die einzelnen Produktströme im allgemeinen voneinander verschieden und an die jeweilige Verpackungsstrategie, Verarbeitung in einer produktstromspezifischen Anzahl von Köpfen oder unterschiedlichen Produkttypen, - geometrien und Faltarten oder Einschlagarten (unterschiedliche Bildung der Verpackung) angepasst. Es ist auch möglich Verpackungseinrichtungen/-maschinen mit nur einem Kopf mehrbahnig zu beschicken, d.h. dem Kopf werden mehrere parallele Produktströme zugeführt, wobei die unverpackten Produkte wie auch der Packstoff benachbart zu dem Produkt dem Kopf zugeführt werden und die Artikel innerhalb einer Rotatior des Kopfes mit einem Winkel α < 360° fertig verpackt und von dem Kopf abgegeben werden. Die Erfindung betrifft also ein Hochleistungs-Verpackungsverfahren zur Verpackung von, insbesondere kleinstückigen, Produkten, vorzugsweise Süßwaren, wie Hart- oder Weichkaramellen, Pralinen oder dergleichen, wobei die Produkte in einer Mehrzahl von Produktströmen durch zumindest eine Verpackungseinrichtung hindurchgeführt werden, wobei die Produkte vorzugsweise gleichzeitig durch die zumindest eine Verpackungseinrichtung hindurchgeführt und/oder zu der Verpackungseinrichtung zugeführt werden.

Vorzugsweise werden die Produktströme der Verpackungseinrichtung parallel, vorzugsweise gleichzeitig, zugeführt, insbesondere ist eine Bewegungsgeschwindigkeit der Produkte durch die Verarbeitungseinrichtung im Wesentlichen gleich.

In einer vorteilhaften Ausführung ist eine einbahnige Zuführung eines Produktstromes und Aufteilung desselben zu Ausbildung einer Mehrzahl von die Verpackungseinrichtung durchsetzenden Produktströmen vorgesehen, wobei die Aufteilung vorzugsweise stromauf oder innerhalb der Verpackungseinrichtung erfolgt.

Bevorzugt werden die Produktströme der Verpackungseinrichtung aus einem gemeinsamen Produktvorrat, insbesondere eine Vereinzelungseinrichtung, oder aus getrennten Produktvorräten, insbesondere Vereinzelungseinrichtungen zugeführt. Vorzugsweise werden die Produktströme der Verpackungseinrichtung aus der gleichen oder aus unterschiedlichen Richtungen, vorzugsweise parallel, zugeführt.

Vorzugsweise werden in den Produktströmen gleiche oder verschiedene Artikel geführt und/oder diese in gleichen oder unterschiedlichen Verpackungsverfahren, Falt- oder Einschlagarten verpackt.

Es ist in vorteilhafter Weise vorgesehen, dass die Mehrzahl der Produktströme innerhalb der Verpackungseinrichtung jeweils aus vereinzelten Produkten besteht, die sich bevorzugt im Wesentlichen parallel zueinander, vorzugsweise in einer gleichen Verpackungsstufe des Verpackungsverfahrens befinden, wobei jedem Produkt innerhalb eines Produktstromes in der Verpackungseinrichtung ein Packstoffstück zugeordnet wird, insbesondere der Packstoff in die Verpackungseinrichtung mit hoher Geschwindigkeit im Wesentlichen radial als Packstoffband zugeführt, dieses in der Verpackungseinrichtung gehalten und ein Packstoffabschnitt abgetrennt wird oder Packstoffabschnitte von einer Packstoffbahn vor dem Einführen in die Verpackungseinrichtung abgetrennt und der Verpackungseinrichtung Packstoffabschnitte im Wesentlichen radial und vereinzelt zugeführt werden.

Vorzugsweise werden die Produkte mehrerer Produktströme in einem kontinuierlichen und/oder intermittierenden Prozess verpackt und/oder die Produktströme mit einer unterschiedlichen Anzahl von Vorrichtungen verarbeitet.

Insbesondere werden die Produkte zweibahnig parallel zu einer Entnahmevorrichtung der Verpackungseinrichtung mit Produktaufnahmemitteln für die Produkte jedes der Packstoffströme zugeführt. Nach Aufnahme der Produkte wird diesen entweder sogleich ein Packstoffabschnitt zugeordnet oder der Packstoff wird den Produkten erst in einer abfolgenden Greifervorrichtung zugeordnet und das Produkt wird mit dem Packstoffstück, vorzugsweise in Parallelführung der Produktströme, einer Packvorrichtung der Verpackungseinrichtung zugeführt, die Produkt/Packstoff-Haltemittel für die Produkte des Produktstromes aufweist, und das fertig verpackte Produkt (7) wird von der Verpackungseinrichtung (1) abgefördert.

Vorzugsweise wird im Anschluss an das Verpacken des Produktes die Verpackung, insbesondere thermisch, konditioniert, vorzugsweise über eine Kühlstrecke oder eine Wärmestrecke zur Unterstützung eines dichten Verschließens der Verpackung, insbesondere Ansiegelns von Packstoff, geführt.

Vorzugsweise nimmt die Entnahmevorrichtung die Produkte zumindest zweier Produktströme, die zumindest im Wesentlichen parallel und vorzugsweise aus der gleichen Richtung, insbesondere gleichzeitig, zugeführt werden, vorzugsweise aus einer im Wesentlichen horizontalen Bereitstellungsebene auf und/oder werden die Produkte der Produktströme aus der Entnahmevorrichtung im Wesentlichen gleichzeitig aufgenommen. Insbesondere wird eine Mehrzahl von, vorzugsweise paarweise, vorgesehenen Produktströmen einer Mehrzahl von Entnahmevorrichtungen zugeführt, insbesondere werden die Produkte der Mehrzahl von Produktströmen, aufgenommen durch die Mehrzahl von Entnahmevorrichtungen, einer gemeinsamen Packvorrichtung, vorgesehen zur Verarbeitung aller zugeführten Produktströme, oder einer der Anzahl der Entnahmevorrichtungen entsprechenden Anzahl von Packvorrichtungen zugeführt.

Insbesondere werden die Produkte innerhalb der Produktströme stromauf der den Produktströmen zugeordneten Entnahmevorrichtung vereinzelt, vorzugsweise die Produktströme der Entnahmevorrichtung in Längsfördereinrichtungen oder nach Vereinzelung durch Abtrennung von einem kontinuierlichen Massestrang zugeführt und/oder die Produkte können innerhalb der Entnahmevorrichtung oder nach Übergabe an eine Greifervorrichtung um 90° gedreht werden.

In einer Ausführungsform der Erfindung wird der Packstoff mehrbahnig entsprechend der Anzahl der Produktströme, vorzugsweise im Wesentlichen radial, der Entnahmeeinrichtung zugeführt werden und benachbart zu den Produkten gehalten, vorzugsweise geklemmt. Insbesondere kann der Packstoff mehrbahnig entsprechend der Anzahl der Produktströme, vorzugsweise im Wesentlichen radial, zu einer stromab der Entnahmevorrichtung vorgesehenen Greifervorrichtung zugeführt werden, und es werden von dieser die Produkte mit zugeordnetem Packstoff mehrbahnig an die nachgeordnete Packvorrichtung übergeben.
In einer vorteilhaften Ausführung ist vorgesehen, dass eine Packstoffbahn eine Mehrzahl von Produktströmen, vorzugsweise im Wesentlichen quer zu diesen, lokal überdeckt und/oder ein Packstoffabschnitt vor seiner Abtrennung von der Packstoffbahn in eine Mehrzahl von Streifen getrennt und unterteilt wird, insbesondere pro Produktstrom zumindest eine, vorzugsweise zwei oder mehr Packstoffzuführungseinrichtungen, insbesondere Packstoffrollen, vorgesehen sind und vorzugsweise Packstoff an in Bewegungsrichtung des Packstoffstromes unterschiedliche Position zu Produkten diesen zugeführt wird.
Die Produkte werden aus einer Produktzuführung entnommen oder zugeführt und zumindest teilweise in einem einzigen Kopf oder einer einzigen, vorzugsweise um eine stationäre Rotationsachse rotierenden Vorrichtung verpackt, insbesondere werden Produkt und Packstoff gemeinsam oder zeitlich versetzt dem Kopf zugeführt.
Es ist bevorzugt, dass die Produkte jedes Produktstromes in einer funktionsgleichen oder funktionsähnlichen Vorrichtung zunächst im Wesentlichen gleichbehandelt werden, vorzugsweise diese Vorrichtungen produktstromspezifisch zum einen diskontinuierlich (intermittierend) und zum anderen kontinuierlich angetrieben werden, oder eine Mehrzahl zum kontinuierlichen Betrieb ausgelegter Vorrichtungen/Köpfe, zugeordnet zu einer Mehrzahl von Produktströmen, intermittierend angetrieben werden.
Es kann vorgesehen sein, dass die Produkte eines Produktstromes, insbesondere mit produktstromspezifisch intermittierend oder kontinuierlich angetriebenen Köpfen oder Rädern, vorzugsweise derselben Verfahrensstufe, in einen anderen Produktstrom, z.B. von kontinuierlicher zu diskontinuierlicher Produktverarbeitung, oder umgekehrt, transferiert werden.
Die Erfindung umfasst auch eine Hochleistungs-Verpackungseinrichtung zur Verpackung von, insbesondere kleinstückigen, Produkten, vorzugsweise Süßwaren, wie Hart- oder Weichkaramellen, Pralinen oder dergleichen, insbesondere zur Durchführung eines der vorbezeichneten Hochleistungs-Verpackungsverfahren mit Verarbeitung einer Mehrzahl von Produktströmen aus vereinzelten Produkten, mit zumindest einer Packvorrichtung, die eine Mehrzahl von aus Produkt/Packstoff-Haltemitteln bestehenden Verpackungseinheiten aufweist und jede Verpackungseinheit einem Produktstrom aus vereinzelten Produkten zugeordnet ist.
Erfindungsgemäß ist eine gleichzeitige Verarbeitung der Produktströme, die im Wesentlichen parallel und/oder in gleicher Richtung geführt sind, nach dem Prinzip aneinander abrollender Kreise zusammenarbeitender Köpfe oder Räder vorgesehen.
Gemäß einem Ausführungsbeispiel weist eine Entnahmevorrichtung zumindest ein Entnahmerad mit mehreren Sätzen von, vorzugsweise schwenkbar um zur, insbesondere horizontalen, Rotationsachse des Entnahmerades parallele Schwenkachsen schwenkbaren Entnahmeeinheiten auf, wobei jeweils ein Satz dieser Entnahmeeinheiten einem Produktstrom zugeordnet ist, und die Entnahmeeinheiten vorzugsweise aus paarweise angeordneten Haltebackenpaaren oder Vakuumsaugern bestehen.
Es ist auch vorteilhaft, wenn die eine Entnahmevorrichtung eine Mehrzahl von Entnahmerädern mit jeweils an diesen vorzugsweise schwenkbar gelagerten Entnahmeeinheiten aufweist, wobei die Anzahl der Entnahmeräder der Anzahl der Produktströme entspricht.
Vorzugsweise ist einer Entnahmevorrichtung eine Mehrzahl von Längsfördereinrichtungen, wie Transportbändern, Ketten oder dergleichen vorgeschaltet und jeder Längsfördereinrichtung vorzugsweise ein Produktstrom zugeordnet ist oder eine Mehrzahl von Produktströmen sind durch zumindest eine gemeinsame Längsfördereinrichtung der Entnahmevorrichtung zugeführt.
Es kann auch eine einbahnige Zuführung eines Packmittelstromes aus einzelnen Produkten und eine Produktweiche stromauf der Entnahmevorrichtung zur Erzeugung einer Mehrzahl von Produktströmen aus vereinzelten Produkten durch die Hochleistungs-Verpackungseinrichtung vorgesehen sein und/oder eine Zuförderung von Massesträngen als Produktströme erfolgen, von denen stromauf der Entnahmevorrichtung durch, vorzugsweise rotierende Messer und Trennbearbeitung in einer Ebene senkrecht zur Zuführungsrichtung, einzelne Produkte gebildet sind, die vereinzelt von je einem Satz Entnahmeeinheiten eines oder mehrerer Entnahmeräder entnommen sind.

Nach einer bevorzugten Ausführung ist zumindest eine Packmittelzuführungsvorrichtung zur Zuführung von Packstoff zu den vereinzelten Produkten entweder, insbesondere im Wesentlichen radial, zu der Entnahmevorrichtung oder einer stromab derselben als Greiferrad ausgebildeten Übergabevorrichtung vorgesehen sind und/oder Packstoffabschnitte in der Entnahmevorrichtung, insbesondere dem jeweiligen Entnahmerad, entweder vor- oder nach dem Abtrennen von einer Packstoffbahn benachbart zu einem Produkt gehalten oder einer für jeden Packmittelstrom vorgesehenen Übergabevorrichtung, insbesondere Greiferrädern, stromab der Entnahmevorrichtung in entsprechender Weise zugeführt.

Die Hochleistungs-Verpackungseinrichtung beinhaltet vorzugsweise eine um eine parallele Rotationsachse zu einer Rotationsachse der Entnahmevorrichtung und/oder der Rotationsachse einer Greifervorrichtung drehbare Packvorrichtung mit je einem, jedem Packmittelstrom zugeordnetem Satz von Verpackungseinheiten.

Insbesondere ist der Packvorrichtung eine vorzugsweise als Abgaberad ausgebildete, mehrbahnige Abfördereinrichtung und/oder eine dieser nachgeordnete Konditionierstrecke, insbesondere Kühl- oder Wärmestrecke zum Dichtverschließen der Verpackungen, insbesondere stirnseitigen Ansiegeln, zugeordnet.

Vorzugsweise enthält die Verpackungseinrichtung eine Mehrzahl von Entnahmevorrichtungen, denen jeweils eine Mehrzahl von Produktströmen, insbesondere parallele, paarweise vorgesehene Produktströme, zugeordnet sind und die Entnahmevorrichtungen einer Packvorrichtung zugeordnet sind, die mit einer Anzahl von Sätzen von Verpackungseinheiten bestückt ist, wobei die Anzahl der Sätze von Verpackungseinheiten der Anzahl der Packmittelströme der Entnahmevorrichtungen entspricht.

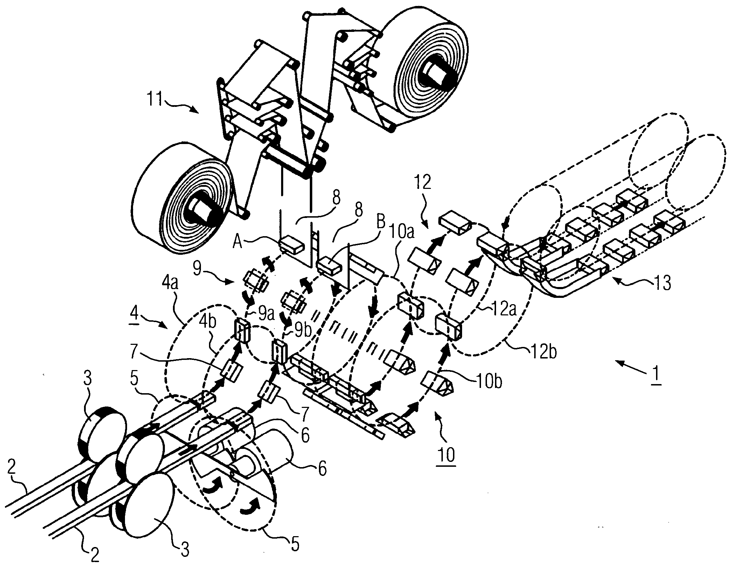

Insbesondere enthält die Hochleistungs-Verpackungseinrichtung intermittierend und kontinuierlich arbeitende Vorrichtungen für gleiche oder verschiedene Produktströme und/oder eine gleiche oder unterschiedliche Anzahl verpackungswirksamer Vorrichtungen für gleiche oder verschiedene Produktströme und/oder gleiche oder unterschiedliche Produkt- und/oder Packstoff-Haltelemente und/oder Vorrichtungsmittel, insbesondere der Packvorrichtung, für gleiche oder unterschiedliche Produktströme. Die Verpackungseinrichtung ist mit einem einen einzigen Kopf oder einer um eine stationäre Rotationsachse umlaufenden Vorrichtung zum teilweisen oder vollständigen Verpacken der Produkte mehrerer Produktströme vorgesehen. Vorzugsweise sind Transfereinrichtungen zwischen unterschiedlichen Produktströmen zugeordneten Köpfen oder Rädern, insbesondere zwischen produktstromspezifischen Produkt-/ Packstoff-Haltemitteln vorgesehen, und/oder eine Kombination funktionsgleicher oder funktionsähnlicher aber unterschiedlich intermittierend und kontinuierlich für verschiedene Produktströme angetriebener Vorrichtungen, wie Entnahme-, Greifer- oder Packvorrichtungen.
Insbesondere weist die Hochleistungs-Verpackungseinrichtung eine Mehrzahl von Produktströmen zugeordnete Produkt-/Packstoff-Halteeinheiten auf, vorzugsweise miteinander durch Transfereinrichtungen verbindbar, vorgesehen an einer einzigen rotierenden Kopf oder Rad.
Erfindungsgemäß ist ferner eine Hochleistungs-Verpackungsmaschine mit zunächst einer Hochleistungs-Verpackungseinrichtung der vorbeschriebenen Art oder eine Verpackungsmaschinenanordnung bestehend aus einer Mehrzahl von derartigen Verpackungsmaschinen vorgesehen.
Nachstehend wird ein Ausführungsbeispiel anhand einer zugehörigen Zeichnung näher erläutert. In dieser zeigt die Figur in schematischer Darstellung eine Hochleistungs-Verpackungseinrichtung für hohe Leistungen, bei der die zu verpackenden Produkte von je einem Massestrang abgetrennt werden.
Der Hochleistungs-Verpackungseinrichtung 1 werden im Wesentlichen parallel zwei Massestränge 2 durch Zuführungswalzen 3 zugeführt und stromauf einer Entnahmevorrichtung 4 durch rechtwinklig zur Transportrichtung der Massestränge 2 vorgesehene, rotierende Schneidmesser 5, die von Servomotoren 6 angetrieben sind, einzelne Produkte 7 vereinzelt und paarweise und vorzugsweise gleichzeitig und aus der gleichen Richtung der Entnahmevorrichtung 4 zugeführt. Auf diese Weise bilden die Produkte 7 zwei parallele Produktströme A, B, die parallel und vorzugsweise unabhängig voneinander durch die Verpackungseinrichtung 1 geführt werden. Die vereinzelten Produkte 7 werden hier in Päckchenfaltung verpackt, es kann jedoch auch jede andere Faltungsart oder Verpackungsart in gleicher Weise eingesetzt werden, insbesondere in Abhängigkeit von der Art der Produkte.

Anstelle der Abtrennung der Produkte vom Massestrang können diese selbstverständlich über korrespondierend zur Darstellung der Massestränge 2 anzuordnende Längsführungseinrichtungen der Entnahmevorrichtung 4 zugeführt werden. Auch eine vereinzelte Zuführung unter Verwendung eines oder mehrere Produktvorratsspeicher aus denen die Produkte in Längsführungseinrichtungen vereinzelt werden, ist möglich, wie auch die Führung der Produkte in zunächst nur einem einzigen Produktstrom, der über eine Produktweiche dann stromauf der Entnahmevorrichtung 4 auf zwei oder mehr Produktströme aufgeteilt wird. In diesem Fall wäre die Zuführungsgeschwindigkeit doppelt so hoch wie die Durchlaufgeschwindigkeit der Produkte durch die Verpackungseinrichtung 1 zu wählen.

Die Figur zeigt die Verarbeitungseinrichtung hier in schematischer Darstellung und ohne die entsprechenden Produkthalteorgane (üblicherweise Haltebackenpaare) bzw. ohne die Einrichtungen zum Klemmen von Packstoffabschnitten 8 innerhalb der Verarbeitungseinrichtung. Diese ist hier auch ohne Details zu den Produkthaltemitteln und Einschlagvorrichtungen an einer nachgeordneten Packvorrichtung 10, da hierfür sämtliche Faltungsarten und technischen Ausführungsmittel gewählt werden können, wie sie z.B. Gegenstand der eingangs erwähnten DE 10 2008 019 605 A1 und DE 10 2005 017 329 A1 sind, deren Inhalt hiermit durch ausdrückliche Inbezugnahme mit zum Gegenstand und Inhalt der vorliegenden Anmeldung gemacht wird und auf die insoweit hinsichtlich der technischen Ausführung dieser Mittel als eine Ausführungsweg Bezug genommen wird.

Die Entnahmevorrichtung 4 ist vorzugsweise als aus zwei koaxialen Entnahmerädern 4a, 4b bestehend ausgebildet, an denen hier nicht dargestellte Produkthaltemittel, wie schwenkbar um eigene Parallelachsen zur Rotationsachse der Entnahmeräder 4a, 4b schwenkbare Entnahmeeinheiten, jeweils bestehend aus einem Haltebackenpaar zur Produktentnahme vorgesehen sind.

Es ist aber auch möglich, die beiden Sätze von Entnahmeeinheiten (jeder Satz von Entnahmeeinheiten ist einem Produktstrom A, B zugeordnet) beiderseits eines einzigen Entnahmerades anzuordnen und z.B. die Antriebe der schwenkbaren Entnahmeeinheiten über koaxiale Steckachsen zu realisieren. Kann ein hohes Maß an Synchronisation der Zuführgeschwindigkeit und Vereinzelung der Produkte 7 sichergestellt werden, können die Sätze Entnahmeeinheiten der Entnahmeräder 4a, 4b bzw. als Alternative eines einzigen Entnahmerades auch über jeweils einen gemeinsamen Antrieb angesteuert werden. Größere Flexibilität und Toleranzfelder hinsichtlich der Steuerung sind aber durch separate Antriebe zu erreichen.

In dem vorliegendem Fall ist die Verpackungseinrichtung 1 als Dreikopfmaschine ausgebildet (maßgebend ist jeweils die Anzahl verpackungswirksamer artikeltragender Köpfe), wobei sich als Greifervorrichtung oder Übergabevorrichtung an die Entnahmevorrichtung 4 eine aus zwei Greiferrädern 9a, 9b bestehende Übergabevorrichtung 9 anschließt, wobei auch hier die entsprechenden Haltemittel für Produkte und in die Übergabevorrichtung zugeführte Packstoffabschnitte 8 nicht gezeigt sind. Diese Produkthaltemittel sind vorzugsweise Haltebackenpaare mit diesen zugeordneten Packstoff-Halteeinrichtungen (Packmittelzangen), die um eigene oder koaxiale Achsen zu den Entnahmeeinheiten oder von Haltebacken oder Haltebackenpaaren der Entnahmeräder 9a, 9b schwenkbar sind.

Die ersten und zweiten Sätze von Produktaufnahmemitteln der Entnahmeräder 4a, 4b und der Greiferräder 9a, 9b kämmen miteinander im Sinne aneinander abrollender Räder, wie dies bei Verpackungsmaschinen nach dem kontinuierlichen Prinzip üblich ist. Die Drehrichtungen der Entnahmeräder 4a, 4b bzw. der Greiferräder 9a, 9b sind durch Pfeile in der Figur angegeben. In diesem Falle werden die Produkte 7 auf ihrem Transportweg durch die Greiferräder 9a, 9b zwischen Aufnahme von den Entnahmerädern 4a, 4b und dem Einschießen, d.h. der radialen Zufuhr von Packstoffabschnitten 8 um 90° gedreht, wie dies ebenfalls durch Pfeile in der Zeichnung angegeben ist.

Die Packstoffzufuhr in die Greiferräder 9a, 9b erfolgt von entsprechenden Packmittelzuführungsvorrichtungen 11 (von diesen ist hier nur eine gezeigt), wobei der Packstoff entweder als Packstoffband radial benachbart zu entsprechenden Packstoffhaltemitteln und den Produkthaltemitteln eingeführt, festgehalten (geklemmt) und anschließend die Packstoffabschnitte 8 vom Packstoffband abgetrennt werden oder aber die Packstoffabschnitte 8 werden bereits vom Packstoffband abgetrennt in die Greiferräder 9a, 9b eingeführt.

Für den Fall, dass die Sätze Entnahmeeinheiten in der Entnahmevorrichtung 4 an einem gemeinsamen Entnahmekopf oder Entnahmerad angeordnet sind, ist natürlich auch in der Abfolge der weiteren verpackungswirksamen Köpfe bzw. Räder jeweils nur eines, wie z.B. ein Greiferrad als Greifervorrichtung 9 mit dupliziert angeordneten Produkt-/Packstoff-Haltemitteln vorgesehen.

Aus den Greiferrädern 9a, 9b werden die Produkte, teilweise bereits umhüllt (U-förmiger Umschlag von Packstoff, um die Produkte 7) an nachgeordnete Packräder 10a, 10b einer Packvorrichtung 10 übergeben, in denen der Einschlagprozess vervollständigt und die Produkte, hier in Päckchenfaltung, vollständig verpackt werden.

In dem vorliegenden Ausführungsbeispiel schließt sich an die Packvorrichtung 10 noch eine Abgabevorrichtung 12 mit Abgaberädern 12a, 12b an, zur Überführung der Produkte in eine Kühl- oder Wärmestrecke 13, in der stirnseitig die Verpackungen dichtversiegelt werden je nach entsprechender Auslegung und Konditionierung der Packstofffolie, so dass dann die Produkte zweibahnig und hier in Päckchenfaltung verschlossen, wie dargestellt aus der Hochleistungs-Verpackungseinrichtung 1 abgeführt werden können.

Die Anzahl der verpackungswirksamen Köpfe ist beliebig und für die Produktströme auch jeweils unterschiedlich wählbar, ebenso die Art der Faltungen und der Produktverpackungen, d.h. die Ausbildung der jeweiligen Produkthalte und Steuermittel bzw. der Packstoffhalteeinrichtungen, die den Produkthaltemitteln (üblicherweise schwenkbare Haltebackenpaare), zugeordnet sind. Es könnte z.B. auch der Packstoff direkt in die Entnahmevorrichtung 4 in entsprechender Weise radial zugeführt werden, wobei dann in diesem Entnahmerad oder Entnahmekopf bzw. den Entnahmerädern 4a, 4b die entsprechende Packstoffhaltemittel (schwenkbare Packstoffzangen) vorgesehen sind, wie dies z.B. Gegenstand der DE 10 2005 017 329 ist und dann die Greifervorrichtung 9 entfallen könnte, d.h. die Entnahmevorrichtung 4 direkt in Kombination mit der Packvorrichtung 9 arbeitet. Gegebenenfalls ist für jeden Produktstrom eine eigene Abgabe- und/oder Konditionsvorrichtung für ein Ansiegeln von Packstoffabschnitten vorgesehen.

Es ist also auch in Abhängigkeit von der Komplexität der Faltung oder anderen Erfordernissen möglich, entsprechend eine kleinere oder größere Anzahl von verpackungswirksamen Köpfen und Zusatz oder Hilfseinrichtungen (wie Siegelstrecken, Abführvorrichtungen oder dergleichen) vorzusehen (z. B. 1-Kopf-Maschine oder 2- bis 5-Kopf-Maschine).

Auch ist die Führung mehrerer Produktströme durch die Verpackungseinrichtung 1 nicht auf zwei Produktströme A, B beschränkt, sondern es können auch mehr als zwei Produktströme parallel durch die Verpackungseinrichtung 1 geführt werden, unter entsprechender Mehrfachanordnung der verpackungswirksamen Köpfe und Produktzuführ- und Vereinzelungseinrichtungen.

Es ist überdies auch möglich, eine Mehrzahl von Entnahmevorrichtungen 4 entweder in direkter Prozessabfolge auf nur eine Packvorrichtung arbeiten zu lassen, wenn diese mit einer entsprechenden Vervielfachung von Sätzen von Packstationen entsprechend der Summe der Packstoffströme ausgerüstet ist, gegebenenfalls auch unter Verwendung entsprechender Greifervorrichtungen zwischen den Entnahmevorrichtungen und der Packvorrichtung.

Durch die erfindungsgemäße Einrichtung der Führung einer Mehrzahl von Produktströmen A, B, vorzugsweise gleichzeitig und unabhängig voneinander, in Parallelführung und Anordnung der entsprechenden verpackungswirksamen Vorrichtungen, kann die Verpackungsleistung einer solchen, zu einer Verpackungsmaschine zur vervollständigenden Verpackungseinrichtung gegenüber herkömmlichen Verpackungsmaschinen vervielfacht werden, bei gleichzeitig hohem Integrationsgrad und Kompaktheit einer solchen Verpackungsmaschine.

Die entsprechenden, verpackungswirksamen Köpfe oder Räder der gleichen Prozessstufe, die vorzugsweise koaxial angeordnet sind und um Starrachsen rotieren und jedem Produktstrom zugeordnet sind, sind vorzugsweise mit einem eigenen Antriebsregime und Steuerorganen ausgerüstet (z.B. durch Verwendung von Hohlachsen und Steckachsen, auf denen die jeweiligen Steuerkurven für die Produkt- und Packstoff-Haltemittel angeordnet sind), um Toleranzen in der Produktzuführung und -verarbeitung zwischen den jeweiligen Produktströmen (hier A, B) Rechnung zu tragen. Die Produktströme A, B können mit unterschiedlichen Geschwindigkeiten durch die Verpackungseinrichtung geführt werden, bei entsprechender räumlicher Auftrennung der einzelnen Stationen in unabhängige Räder wie in der schematischen Darstellung angedeutet. D.h. die Drehzahlen der entsprechenden, den Produktströmen zugeordneten Köpfe oder Räder wie Entnahmeräder 4a, 4b, Greiferräder 9a, 9b oder Packräder 10a, 10b sind vorzugsweise unabhängig steuerbar.

Die Produktströme können aber nicht nur aus gleichen, sondern auch aus voneinander verschiedenen Produkten bestehen, so dass in der Entnahmevorrichtung und/oder der Greifervorrichtung und/oder der Packvorrichtung (die auch aus mehreren abfolgenden Köpfen bestehen kann, wie auch die Greifervorrichtung in mehrere abfolgend angeordnete Köpfe aufgeteilt werden kann) für die einzelnen Produktströme unterschiedliche Produkt- und/oder Packstoffhaltemittel vorgesehen sind und innerhalb der Verpackungseinrichtung unterschiedliche Produkte in unterschiedlicher Faltart oder Produktverpackung parallel verpackt und gleichzeitig durch die Verpackungseinrichtung hindurchgeführt werden können.
Die Erfindung schafft so ein sehr variables Konzept für eine wesentliche Leistungssteigerung von Verpackungsmaschinen, wie sie insbesondere für kleinstückige Süßwaren eingesetzt werden, so dass Verpackungsleistungen erreichbar sind, die um ein Mehrfaches über denjenigen herkömmlicher Verpackungsmaschinen liegen und bei einer zweibahnigen oder dreibahnigen Auslegung einer solchen Verpackungseinrichtung Verpackungsleistungen von 2500 bis 6000 Produkten pro Minute möglich sind. Die Produktströme A, B mit den zugehörigen Einrichtungen können in einer einzigen Verpackungsmaschine integriert, so dass alle zugehörigen Hilfseinrichtungen jeweils nur einmal vorgesehen werden müssen, so dass eine Verpackungsmaschine mit einer mehrbahnigen Verpackungseinrichtung innerhalb derselben zu einer hohen Kompaktheit bei gleichzeitiger Leistungsvervielfachung führt. Es können aber in Verbindung mit mehreren im Wesentlichen parallelen und/oder gleichzeitig geführten Produktströmen auch mehrere Verpackungsmaschinen, insbesondere in kontinuierlich intermittierender (diskontinuierlicher) Längsverkettung vorgesehen sein.
Es können auch mehrere Produktströme auf einer gemeinsamen Längsfördereinrichtung, z.B. einen Zuförderband an einer Entnahmevorrichtung mit einer Mehrzahl von Entnahmerädern entsprechend der Anzahl von Produktströmen oder einer Mehrzahl von Entnahmeeinheiten entsprechend der Anzahl von Produktströmen vorgesehen sein.
Es ist auch möglich, das Prinzip der mehrbahnigen Führung von vorzugsweise unabhängigen Produktströmen durch eine Verpackungseinrichtung mit dem Konzept eines modularen Aufbaus einer solchen Verpackungseinrichtung zu verbinden, wie dies z.B. in der DE 10 2008 019 605 A1 dargelegt ist. so dass z.B. durch Austausch der Zuführungseinrichtungen oder der Packvorrichtung rasche Anpassungen an Format-, Produkt- und Wechsel der Faltungsarten vorgenommen werden können

Eine Verpackungsmaschine kann einen oder mehrere Verpackungseinrichtungen aufweisen.

Es kann auch eine Anordnung einer Mahrzahl von Verpackungsmaschinen zu einer Verpackungsmaschinenanordnung zusammengeordnet werden. Es kann auch in Verbindung mit einer Führung mehrerer Produktströme durch eine oder eine Mehrzahl von Verpackungseinrichtungen um eine Verfahrens- und/oder vorrichtungstechnische Kombination von einem/einer kontinuierlichen Verpackungsprozess/Verpackungseinrichtung mit einem/einer diskontinuierlichen, intermittierenden Verpackungsverfahren/Verpackungseinrichtung in abfolgender Anordnung vorgesehen sein. Die Produktionsströme können in im Wesentlichen gleicher Richtung oder auch in unterschiedlichen Richtungen vorzugsweise auch in 180° entgegengesetzter Richtung durch eine Mehrzahl von vorzugsweise im Wesentlichen parallel arbeitenden Packvorrichtungen geführt sein.

Schließlich ist es auch, insbesondere bei weniger komplizierten Produkten oder Faltungs- oder Einschlagarten möglich, eine Einkopf-Maschine zu realisieren.

Diesem Kopf kann z.B. auch Produkt und Packstoff quasi gleichzeitig, z.B. durch eine Einstößervorrichtung oder durch gemeinsame Bereitstellung im Bewegungsweg eines umlaufenden Greifers des Kopfes zugeführt werden, gefolgt von einem Teil der Faltoperationen zur Verpackung des Produktes und z.B. einer Fertigverpackung desselben im sich an den Kopf anschließenden Auslauf.

Natürlich können der Kopf Produkt- und Packstoff auch separat zugeführt oder der Kopf als eine Kombination von Entnahme- und/oder Greifer und/oder Packkopf zur zumindest Teilverpackung des Produktes sein.

Es ist auch möglich, alle Verfahrensschritte von der Entnahme des Produktes aus einer Zuführungs- und Vereinzelungseinrichtung bis zur Abgabe des fertig verpackten Produktes, d.h. insbesondere die vollständige Verpackung des Produktes, mit einem einzigen Kopf oder Rad zu bewerkstelligen, der die entsprechenden Produkt- und Packstoffhaltemittel aufweist und dem vorzugsweise im Wesentlichen radial nicht nur der Packstoff zugeführt wird, sondern in Umfangsrichtung stromab auch die entsprechenden, einschlagbildenden Vorrichtungen wie Faltbögen und dergleichen zur Ausbildung der Verpackung (z.B. auch parallel zugeordnete Drehköpfe zur Ausbildung von Verpackungen im Dreh- oder Doppeldreheinschlag) zugeordnet sind. Auch einem solchen, maximal integrierten Entnahme- und Packkopf (d.h. Kombination von Entnahmevorrichtung und Packvorrichtung) (gegebenenfalls auch mit Übergabemitteln zwischen beiden) kann eine mehrbahnige bzw. in einer Mehrzahl von Produktströmen vorgesehene Zuführung von Produkten zugeordnet sein, so dass der Packkopf vorzugsweise in der Art eines Zylinders oder einer Walze mit entsprechender Mehrzahl von Produkthalte- und Packstoffhaltemitteln ausgebildet ist.

Einem derartigen Kopf kann auch Produkt- und Packstoff gemeinsam, z.B. durch eine Einstößervorrichtung zugeführt werden, so dass der Kopf im Wesentlichen einen Packkopf zur Teil- oder Fertigverpackung des Produktes bzw. der in mehreren Produktströmen zugeführte Produkte bildet.

Überdies kann bei Verwendung mehrere Köpfe oder Räder (z.B. Zwei- oder Drei-Kopf-Verpackungsmaschinen) das Prinzip der kontinuierlichen Durchführung zumindest eines Produktstromes durch die Verpackungseinrichtung mit dem Prinzip einer intermittierenden oder diskontinuierlichen Führung und Behandlung eines weiteren Produktstromes in Kooperation mit anderen Produkthalte- oder Packstoffhaltemitteln verknüpft werden.

Eine Führung mehrerer Produktströme durch die Verpackungseinrichtung gestattet die Kombination eines Vorrichtungszugs für einen Produktstrom (aus kontinuierlich arbeitenden Aggregaten (Köpfen oder Rädern)) mit einem Vorrichtungszug für einen anderen Produktstrom (aus intermittierend arbeitenden Aggregaten (Köpfen oder Rädern), wobei vorzugsweise auch eine Überführung von Produkten eines Produktstromes von einer diesem zugeordneten Vorrichtung (Kopf oder Rad) in eine, insbesondere parallel angeordnete Vorrichtung (Kopf oder Rad bzw. entsprechende Produkt- bzw. Packstoffhaltemittel) innerhalb der gemeinsamen Verpackungseinrichtung (Verpackungsmaschine) möglich ist, z.B. auch im Sinne eines Ausschleusens von Produkten eines Packstoffstromes, deren Verpackung sich von derjenigen anderer Produkte im gleichen oder z.B. einem benachbarten Produktstrom unterscheidet (z.B. bei Umverpackungen).

Es ist auch möglich, das Prinzip der mehrbahnigen Führung von vorzugsweise unabhängigen Produktströmen durch eine Verpackungseinrichtung mit dem Konzept eines modularen Aufbaus einer solchen Verpackungseinrichtung zu verbinden, wie dies z.B. in der DE 10 2008 019 605 A1 dargelegt ist. so dass z.B. durch Austausch der Zuführungseinrichtungen oder der Packvorrichtung mögliche Anpassungen an Format-, Produkt- und Wechsel der Faltungsarten vorgenommen werden können.

Die Erfindung betrifft ein Hochleistungs-Verpackungsverfahren zur Verpackung von, insbesondere kleinstückigen, Produkten, vorzugsweise Süßwaren wie z.B. Hart- oder Weichkaramellen, Pralinen oder dergleichen und eine Hochleistungs-Verpackungseinrichtung, insbesondere zur Durchführung des Verfahrens sowie eine Hochleistungs-Verpackungsmaschine mit einer derartigen Verpackungseinrichtung. Erfindungsgemäß wird eine Mehrzahl von Produktströmen, vorzugsweise parallel, durch eine Verpackungseinrichtung hindurchgeführt, die vorzugsweise zumindest für einen Produktstrom, nicht vorzugsweise für alle Produktströme eine Verpackung der diesem zugehörenden Produkte in einem kontinuierlichen Prozess vorsieht.

## Patentansprüche

1. Hochleistungs-Verpackungsverfahren zur Verpackung von, insbesondere kleinstückigen, Produkten, vorzugsweise Süßwaren, wie Hart- oder Weichkaramellen, Pralinen oder dergleichen, wobei die Produkte (7) in einer Mehrzahl von Produktströmen (A, B) durch zumindest eine Verpackungseinrichtung (1) mit zumindest einer Packvorrichtung (10) hindurchgeführt werden, wobei die zumindest eine Packvorrichtung (10) eine Mehrzahl von aus Produkt/Packstoff-Haltemitteln bestehenden Verpackungseinheiten aufweist, wobei jede Verpackungseinheit einem Produktstrom (A, B) aus vereinzelten Produkten (7) zugeordnet ist, wobei jedem Produkt (7) innerhalb eines Produktstromes (A, B) in der Verpackungseinrichtung (1) ein Packstoffstück zugeordnet wird, und wobei die Produkte (7) mehrerer Produktströme in einem kontinuierlichen und/oder intermittierenden Prozess verpackt und/oder die Produktströme mit einer unterschiedlichen Anzahl von Vorrichtungen verarbeitet werden,
**dadurch gekennzeichnet, dass**
jeweils an einem einzigen rotierenden Kopf oder Rad einer Mehrzahl von Produktströmen zugeordnete Verpackungseinheiten vorgesehen werden, wobei die Produktströme (A, B) im Wesentlichen parallel und/oder in gleicher Richtung nach dem Prinzip aneinander abrollender Kreise zusammenarbeitender Köpfe oder Räder gleichzeitig verarbeitet werden, und wobei der Packstoff in die Verpackungseinrichtung (1) mit hoher Geschwindigkeit im Wesentlichen radial zum jeweiligen Kopf oder Rad als Packstoffband zugeführt, dieses in der Verpackungseinrichtung (1) gehalten und ein Packstoffabschnitt (8) abgetrennt wird oder Packstoffabschnitte (8) von einer Packstoffbahn vor dem Einführen in die Verpackungseinrichtung (1) abgetrennt und der Verpackungseinrichtung (1) Packstoffabschnitte (8) im Wesentlichen radial und vereinzelt zum jeweiligen Kopf oder Rad zugeführt werden.

2. Hochleistungs-Verpackungsverfahren nach Anspruch 1, **dadurch gekennzeichnet, dass** die Produkte (7), vorzugsweise gleichzeitig, durch die zumindest eine Verpackungseinrichtung hindurchgeführt und/oder zu der Verpackungseinrichtung (1) zugeführt werden.

3. Hochleistungs-Verpackungsverfahren nach Anspruch 1 oder 2, **dadurch gekennzeichnet, dass** die Produktströme (A, B) der Verpackungseinrichtung (1) parallel, vorzugsweise gleichzeitig, zugeführt werden, insbesondere eine Bewegungsgeschwindigkeit der Produkte (7) durch die Verpackungseinrichtung (1) im Wesentlichen gleich ist.

4. Hochleistungs-Verpackungsverfahren nach einem der vorhergehenden Ansprüche 1 bis 3, **gekennzeichnet durch** eine einbahnige Zuführung eines Produktstromes und Aufteilung desselben zu Ausbildung einer Mehrzahl von die Verpackungseinrichtung durchsetzenden Produktströmen (A, B), wobei die Aufteilung vorzugsweise stromauf oder innerhalb der Verpackungseinrichtung (1) erfolgt.

5. Hochleistungs-Verpackungsverfahren nach einem der vorhergehenden Ansprüche 1 bis 4, **dadurch gekennzeichnet, dass** die Produktströme der Verpackungseinrichtung aus einem gemeinsamen Produktvorrat, insbesondere eine Vereinzelungseinrichtung, oder aus getrennten Produktvorräten, insbesondere Vereinzelungseinrichtungen, vorzugsweise die Produktströme (A, B) der Verpackungseinrichtung (1) aus der gleichen oder aus unterschiedlichen Richtungen, vorzugsweise parallel, zugeführt werden.

6. Hochleistungs-Verpackungsverfahren nach einem der vorhergehenden Ansprüche 1 bis 5, **dadurch gekennzeichnet, dass** in den Produktströmen (A, B) gleiche oder verschiedene Artikel (7) geführt und/oder diese in gleichen oder unterschiedlichen Verpackungsverfahren, Falt- oder Einschlagarten verpackt werden.

7. Hochleistungs-Verpackungsverfahren nach einem der vorhergehenden Ansprüche 1 bis 6, **dadurch gekennzeichnet, dass** die Mehrzahl der Produktströme innerhalb der Verpackungseinrichtung (1) jeweils aus vereinzelten Produkten (7) besteht, die sich bevorzugt im Wesentlichen parallel zueinander, vorzugsweise in einer gleichen Verpackungsstufe des Verpackungsverfahrens befinden.

8. Hochleistungs-Verpackungsverfahren nach einem der vorhergehenden Ansprüche 1 bis 7, **dadurch gekennzeichnet, dass** die Produkte (7) zweibahnig parallel zu einer Entnahmevorrichtung (4) der Verpackungseinrichtung (1) mit Produktaufnahmemitteln für die Produkte jedes der Packstoffströme (A, B) zugeführt, nach Aufnahme der Produkte (7) diesen entweder sogleich ein Packstoffabschnitt zugeordnet oder der Packstoff (8) den Produkten (7) erst in einer abfolgenden Greifervorrichtung (9) zugeordnet wird und das Produkt (7) mit dem Packstoffstück, vorzugsweise in Parallelführung der Produktströme (A, B), einer Packvorrichtung (10) der Verpackungseinrichtung (1) zugeführt wird, die Produkt/Packstoff-Haltemittel für die Produkte (7) des Produktstromes aufweist und das fertig verpackte Produkt (7) von der Verpackungseinrichtung (1) abgefördert wird.

9. Hochleistungs-Verpackungsverfahren nach einem der vorhergehenden Ansprüche 1 bis 8, **dadurch gekennzeichnet, dass** im Anschluss an das Verpacken des Produktes (7) die Verpackung, insbesondere thermisch, konditioniert, vorzugsweise über eine Kühlstrecke oder eine Wärmestrecke zur Unterstützung eines dichten Verschließens der Verpackung, insbesondere Ansiegelns von Packstoff, geführt wird.

10. Hochleistungs-Verpackungsverfahren nach einem der vorhergehenden Ansprüche 1 bis 9, **dadurch gekennzeichnet, dass** die Entnahmevorrichtung (4) die Produkte (7) zumindest zweier Produktströme (A, B), die zumindest im Wesentlichen parallel und vorzugsweise aus der gleichen Richtung, insbesondere gleichzeitig, zugeführt werden, vorzugsweise aus einer im Wesentlichen horizontalen Bereitstellungsebene aufnimmt und/oder die Produkte der Produktströme von der Entnahmevorrichtung im Wesentlichen gleichzeitig aufgenommen werden, insbesondere eine Mehrzahl von, vorzugsweise paarweise, vorgesehenen Produktströmen einer Mehrzahl von Entnahmevorrichtungen zugeführt wird, insbesondere die Produkte der Mehrzahl von Produktströmen, aufgenommen durch die Mehrzahl von Entnahmevorrichtungen, einer gemeinsamen Packvorrichtung, vorgesehen zur Verarbeitung aller zugeführten Produktströme, oder einer der Anzahl der Entnahmevorrichtungen entsprechenden Anzahl von Packvorrichtungen zugeführt werden.

11. Hochleistungs-Verpackungsverfahren nach einem der vorhergehenden Ansprüche 1 bis 10, **dadurch gekennzeichnet, dass** die Produkte (7) innerhalb der Produktströme (A, B) stromauf der den Produktströmen zugeordneten Entnahmevorrichtung (4) vereinzelt, vorzugsweise die Produktströme (A, B) der Entnahmevorrichtung (4) in Längsfördereinrichtungen oder nach Vereinzelung durch Abtrennung von einem kontinuierlichen Massestrang zugeführt werden und/oder die Produkte (7) innerhalb der Entnahmevorrichtung (4) oder nach Übergabe an eine Greifervorrichtung (9) um 90° gedreht werden.

12. Hochleistungs-Verpackungsverfahren nach einem der vorhergehenden Ansprüche 1 bis 11, **dadurch gekennzeichnet, dass** der Packstoff (8) mehrbahnig entsprechend der Anzahl der Produktströme (A, B), vorzugsweise im Wesentlichen radial, der Entnahmevorrichtung (4) zugeführt und benachbart zu den Produkten (7) gehalten, vorzugsweise geklemmt wird, insbesondere der Packstoff mehrbahnig entsprechend der Anzahl der Produktströme (A, B), vorzugsweise im Wesentlichen radial, zu einer stromab der Entnahmevorrichtung (4) vorgesehenen Greifervorrichtung (9) zugeführt und von dieser die Produkte (7) mit zugeordnetem Packstoff (8) mehrbahnig an die nachgeordnete Packvorrichtung (10) übergeben werden.

13. Hochleistungs-Verpackungsverfahren nach einem der vorhergehenden Ansprüche 1 bis 12, **dadurch gekennzeichnet, dass** eine Packstoffbahn eine Mehrzahl von Produktströmen, vorzugsweise im Wesentlichen quer zu diesen, lokal überdeckt und/oder ein Packstoffabschnitt vor seiner Abtrennung von der Packstoffbahn in eine Mehrzahl von Streifen getrennt und unterteilt wird, insbesondere pro Produktstrom zumindest eine, vorzugsweise zwei oder mehr Packstoffzuführungseinrichtungen, insbesondere Packstoffrollen, vorgesehen sind und vorzugsweise Packstoff an in Bewegungsrichtung des Packstoffstromes unterschiedliche Positionen zu diesen Produkten zugeführt wird.

14. Hochleistungs-Verpackungsverfahren nach einem der vorhergehenden Ansprüche 1 bis 13, **dadurch gekennzeichnet, dass** die Produkte aus einer Produktzuführung entnommen oder zugeführt und zumindest teilweise in einem einzigen Kopf oder einer einzigen, vorzugsweise um eine stationäre Rotationsachse rotierenden Vorrichtung verpackt werden, vorzugsweise Produkt und Packstoff gemeinsam oder zeitlich versetzt dem Kopf zugeführt werden.

15. Hochleistungs-Verpackungsverfahren nach einem der vorhergehenden Ansprüche 1 bis 14, **dadurch gekennzeichnet, dass** die Produkte jedes Produktstromes in einer funktionsgleichen oder funktionsähnlichen Vorrichtung zunächst im Wesentlichen gleichbehandelt werden, vorzugsweise diese Vorrichtungen produktstromspezifisch zum einen diskontinuierlich (intermittierend) und zum anderen kontinuierlich angetrieben werden, oder eine Mehrzahl zum kontinuierlichen Betrieb ausgelegter Vorrichtungen/Köpfe, zugeordnet zu einer Mehrzahl von Produktströmen, intermittierend angetrieben werden.

16. Hochleistungs-Verpackungsverfahren nach einem der vorhergehenden Ansprüche 1 bis 15, **dadurch gekennzeichnet, dass** die Produkte eines Produktstromes, insbesondere mit produktstromspezifisch intermittierend oder kontinuierlich angetriebenen Köpfen oder Rädern, vorzugsweise derselben Verfahrensstufe, in einen anderen Produktstrom, z. B. von kontinuierlicher zu diskontinuierlicher Produktverarbeitung, oder umgekehrt, transferiert werden.

17. Hochleistungs-Verpackungseinrichtung zur Verpackung von, insbesondere kleinstückigen, Produkten, vorzugsweise Süßwaren, wie Hart- oder Weichkaramellen, Pralinen oder dergleichen unter Verarbeitung einer Mehrzahl von Produktströmen (A, B) aus vereinzelten Produkten (7), insbesondere zur Durchführung des Verfahrens nach einem vorhergehenden Ansprüche 1 bis 16, mit zumindest einer Packvorrichtung (10), die eine Mehrzahl von aus Produkt/Packstoff-Haltemitteln bestehenden Verpackungseinheiten aufweist, wobei jeder Verpackungseinheit ein Produktstrom (A, B) aus vereinzelten Produkten (7) zugeordnet ist, mit gleichzeitiger Verarbeitung der Produktströme,
**dadurch gekennzeichnet, dass**
jeweils an einem einzigen rotierenden Kopf oder Rad einer Mehrzahl von Produktströmen zugeordnete Verpackungseinheiten vorgesehen sind, wobei die Produktströme (A, B) im Wesentlichen parallel und/oder in gleicher Richtung nach dem Prinzip aneinander abrollender Kreise zusammenarbeitender Köpfe oder Räder geführt sind.

18. Hochleistungs-Verpackungseinrichtung nach Anspruch 17, **dadurch gekennzeichnet, dass** eine Entnahmevorrichtung (4) zumindest ein Entnahmerad (4a, 4b) mit mehreren Sätzen von, vorzugsweise um zur, insbesondere horizontalen, Rotationsachse des Entnahmerades (4) parallele Schwenkachsen schwenkbare, Entnahmeeinheiten umfasst, wobei jeweils ein Satz dieser Entnahmeeinheiten einem Produktstrom (A, B) zugeordnet ist, und wobei die Entnahmeeinheiten vorzugsweise aus paarweise angeordneten Haltebackenpaaren oder Vakuumsaugern bestehen.

19. Hochleistungs-Verpackungseinrichtung nach Anspruch 17 oder 18, **dadurch gekennzeichnet, dass** eine Entnahmevorrichtung (4) eine Mehrzahl von Entnahmerädern (4a, 4b) mit jeweils an diesen vorzugsweise schwenkbar gelagerten Entnahmeeinheiten aufweist, wobei die Anzahl der Entnahmeräder (4a, 4b) der Anzahl der Produktströme (A, B) entspricht.

20. Hochleistungs-Verpackungseinrichtung nach einem der vorhergehenden Ansprüche 17 bis 19, **dadurch gekennzeichnet, dass** Entnahmevorrichtung eine Mehrzahl von Längsfördereinrichtungen, wie Transportbändern, Ketten oder dergleichen vorgeschaltet ist und jeder Längsfördereinrichtung vorzugsweise ein Produktstrom (A, B) zugeordnet ist oder eine Mehrzahl von Produktströmen (A, B) durch zumindest eine gemeinsame Längsfördereinrichtung der Entnahmevorrichtung (4) zugeführt sind.

21. Hochleistungs-Verpackungseinrichtung nach einem der vorhergehenden Ansprüche 17 bis 20, **gekennzeichnet durch** eine einbahnige Zuführung eines Produktstromes aus einzelnen Produkten und eine Produktweiche stromauf der Entnahmevorrichtung zur Erzeugung einer Mehrzahl von Produktströmen (A, B) aus vereinzelten Produkten durch die Hochleistungs-Verpackungseinrichtung und/oder eine Zuförde-rung von Massesträngen (2) als Produktströme (A, B), von denen stromauf der Entnahmevorrichtung (4), durch vorzugsweise rotierende Messer (5) und Trennbearbeitung in einer Ebene senkrecht zur Zuführungsrichtung, einzelne Produkte (7) gebildet sind, die vereinzelt von je einem Satz Entnahmeeinheiten eines oder mehrerer Entnahmeräder (4a, 4b) entnommen sind.

22. Hochleistungs-Verpackungseinrichtung nach einem der vorhergehenden Ansprüche 17 bis 21, **gekennzeichnet durch** zumindest eine Packmittelzuführungsvorrichtung (11) zur Zuführung von Packstoff (8) zu den vereinzelten Produkten (7) entweder, insbesondere im Wesentlichen radial, zu der Entnahmevorrichtung (4) oder einer stromab derselben als Greiferrad (9a, 9b) ausgebildeten Übergabevorrichtung (9), und/oder wobei Packstoffabschnitte (8) in der Entnahmevorrichtung, insbesondere dem jeweiligen Entnahmerad, entweder vor oder nach dem Abtrennen von einer Packstoffbahn benachbart zu einem Produkt gehalten oder einer für jeden Packmittelstrom vorgesehenen Übergabevorrichtung (9), insbesondere Greiferrädern (9a, 9b), stromab der Entnahmevorrichtung (4) in entsprechender Weise zugeführt sind.

23. Hochleistungs-Verpackungseinrichtung nach einem der vorhergehenden Ansprüche 17 bis 22, **gekennzeichnet durch** eine um eine parallele Rotationsachse zu einer Rotationsachse der Entnahmevorrichtung (4) und/oder der Rotationsachse einer Greifervorrichtung (9) drehbare Packvorrichtung (10) mit je einem, jedem Packmittelstrom (A, B) zugeordnetem Satz von Verpackungseinheiten.

24. Hochleistungs-Verpackungseinrichtung nach einem der vorhergehenden Ansprüche 17 bis 23, **dadurch gekennzeichnet, dass** der Packvorrichtung (10) eine vorzugsweise als Abgaberad (12) ausgebildete, mehrbahnige Abfördereinrichtung und/oder eine dieser nachgeordnete Konditionierstrecke (13), insbesondere Kühl- oder Wärmestrecke zum Dichtverschließen der Verpackungen, insbesondere stirnseitigen Ansiegeln, zugeordnet sind.

25. Hochleistungs-Verpackungseinrichtung nach einem der vorhergehenden Ansprüche 17 bis 24, **gekennzeichnet durch** eine Mehrzahl von Entnahmevorrichtungen, denen jeweils eine Mehrzahl von Produktströmen, insbesondere parallele, paarweise vorgesehene Produktströme, zugeordnet sind und die Entnahmevorrichtungen einer Packvorrichtung zugeordnet sind, die mit einer Anzahl von Sätzen von Verpackungseinheiten bestückt ist, wobei die Anzahl der Sätze von Verpackungseinheiten der Anzahl der Packmittelströme der Entnahmevorrichtungen entspricht.

26. Hochleistungs-Verpackungseinrichtung nach einem der vorhergehenden Ansprüche 17 bis 25, **gekennzeichnet durch** intermittierend und kontinuierlich arbeitenden Vorrichtungen für gleiche oder verschiedene Produktströme und/oder eine gleiche oder unterschiedliche Anzahl verpackungswirksamer Vorrichtungen für gleiche oder verschiedene Produktströme und/oder gleiche oder unterschiedliche Produkt- und/oder Packstoff-Haltelemente und/oder Vorrichtungsmittel, insbesondere der Packvorrichtung, für gleiche oder unterschiedliche Produktströme.

27. Hochleistungs-Verpackungseinrichtung nach einem der vorhergehenden Ansprüche 17 bis 26, **gekennzeichnet durch** einen einzigen Kopf oder eine um eine stationäre Rotationsachse umlaufende Vorrichtung zum teilweisen oder vollständigen Verpacken der Produkte mehrerer Produktströme.

28. Hochleistungs-Verpackungseinrichtung nach einem der vorhergehenden Ansprüche 17 bis 27, **gekennzeichnet durch** Transfereinrichtungen zwischen unterschiedlichen Produktströmen zugeordneten Köpfen oder Rädern, insbesondere zwischen produktstromspezifischen Produkt-/Packstoff-Haltemitteln, und/oder eine Kombination funktionsgleicher oder funktionsähnlicher aber unterschiedlich intermittierend und kontinuierlich für verschiedene Produktströme angetriebener Vorrichtungen, wie Entnahme-, Greifer- oder Packvorrichtung.

29. Hochleistungs-Verpackungseinrichtung nach einem der vorhergehenden Ansprüche 17 bis 28, **dadurch gekennzeichnet, dass** die einer Mehrzahl von Produktströmen zugeordneten Produkt-/Packstoff-Halteeinheiten miteinander durch Transfereinrichtungen verbindbar sind.

30. Hochleistungs-Verpackungsmaschine mit zumindest einer Hochleistungs-Verpackungseinrichtung nach einem der vorhergehenden Ansprüche 17 bis 29.

31. Hochleistungs-Verpackungsmaschinenanordnung mit zumindest einer Hochleistungs-Verpackungsmaschine nach Anspruch 30, insbesondere enthaltend eine Mehrzahl miteinander verketteter Hochleistungs-Verpackungsmaschinen mit kontinuierlicher und/oder intermittierendem Produktdurchlauf durch die Hochleistungs-Verpackungsmaschine.

## Claims

1. A high-performance packaging method for packaging in particular small sized products, preferably confectionery products such as hard or soft caramels, chocolates, or the like, with the products (7) being fed in a plurality of product flows (A, B) through at least one packaging mechanism (1) comprising at least packaging station (10), with at least one packaging station (10) having a plurality of packaging units consisting of product/packaging material holding means, with each packaging unit being allocated to a product flow (A, B) of individual products (7), with a piece of packaging material being allocated to each product (7) within a product flow (A, B) in the packaging mechanism (1), and with the products (7) of several product flows being packaged in a continuous and/or intermittent process and/or the product flows being processed with a variable number of devices,
**characterized in that**
packaging units allocated to a plurality of product flows are provided on each single rotating head or wheel, with the product flows (A, B) being simultaneously processed essentially in parallel and/or in the same direction according to the principle of circles of cooperating heads or wheels rolling on one another, and with the packaging material being fed to the packaging mechanism (1) at high speed, essentially radially to the respective head or wheel, as a packaging material strip, said strip being held in the packaging mechanism (1) and a packaging material section (8) being cut off, or packaging material sections (8) of a packaging material length being cut off before being fed into the packaging mechanism (1), and packaging material sections (8) being fed to the packaging mechanism (1), essentially radially and individually to the respective head or wheel.

2. The high-performance packaging method according to claim 1, **characterized in that** the products (7) are fed, preferably simultaneously, through the at least one packaging mechanism and/or to the packaging mechanism (1).

3. The high-performance packaging method according to claim 1 or 2, **characterized in that** the product flows (A, B) are fed to the packaging mechanism (1) in parallel, preferably simultaneously, and in particular that a movement speed of the products (7) through the packaging mechanism (1) is essentially the same.

4. The high-performance packaging method according to any one of the preceding claims 1-3, **characterized by** a single-lane feeding of a product flow and splitting of the same to form a plurality of product flows (A, B) passing through the packaging mechanism, wherein the splitting preferably takes place upstream of or within the packaging mechanism (1).

5. The high-performance packaging method according to any one of the preceding claims 1-4, **characterized in that** the product flows are fed to the packaging mechanism from a common product supply, in particular a separating mechanism, or from separate product supplies, in particular separating mechanisms, and that preference is given to the product flows (A, B) being fed to the packaging mechanism (1) from the same or from different directions, preferably in parallel.

6. The high-performance packaging method according to any one of the preceding claims 1-5, **characterized in that** the same or different items (7) are fed in the product flows (A, B) and/or that these items are packaged using the same or different packaging methods, folding techniques, or wrapping techniques.

7. The high-performance packaging method according to any one of the preceding claims 1-6, **characterized in that** each of the several product flows within the packaging mechanism (1) consists of individual products (7) that are preferably situated essentially in parallel to one another, preferably in the same packaging stage of the packaging process.

8. The high-performance packaging method according to any one of the preceding claims 1-7, **characterized in that** the products (7) are fed in two lanes in parallel to a removal device (4) of the packaging mechanism (1) with product receiving means for the products of each of the product flows (A, B), that after receipt of the products (7), a packaging material section is either immediately allocated thereto or the packaging material (8) is allocated to the products (7) later in a subsequent gripper device (9) and the product (7) with the piece of packaging material is fed, preferably in parallel guidance of the product streams (A, B), to a packaging device (10) of the packaging mechanism (1), which has product/packaging material holding means for the products (7) of the product flow, and that the fully packaged product (7) is conveyed away from the packaging mechanism (1).

9. The high-performance packaging method according to any one of the preceding claims 1-8, **characterized in that** subsequent to the packaging of the product (7), the packaging is conditioned, in particular thermally, preferably routed along a cooling path or a heating path to facilitate an airtight closure of the packaging, in particular sealing of the packaging material.

10. The high-performance packaging method according to any one of the preceding claims 1-9, **characterized in that** the removal device (4) preferably receives the products (7) of at least two product flows (A, B), which are fed at least essentially in parallel and preferably from the same direction, in particular simultaneously, from an essentially horizontal supply level and/or that the products of the product flows are received from the removal device essentially simultaneously, in particular that a plurality of product flows, preferably provided in pairs, is fed to a plurality of removal devices, in particular that the products of the plurality of product flows received by the plurality of removal devices are fed to a common packaging device provided for processing all infed product flows or to a number of packaging devices corresponding to the number of removal devices.

11. The high-performance packaging method according to any one of the preceding claims 1-10, **characterized in that** the products (7) within the product flows (A, B) are fed upstream individually to the removal device (4) allocated to the product flows, that the product flows (A, B) are preferably fed to the removal device (4) in longitudinal conveyors or after separation by cutting from a continuous material strand, and/or that the products (7) are rotated 90° within the removal device (4) or after transfer to a gripper device (9).

12. The high-performance packaging method according to any one of the preceding claims 1-11, **characterized in that** the packaging material (8) is fed, preferably essentially radially, to the removal device (4) in multiple lanes corresponding to the number of product flows (A, B) and held, preferably clamped, adjacent to the products (7), that the packaging material is in particular fed, preferably essentially radially, in multiple lanes corresponding to the number of product flows (A, B) to a gripper device (9) provided downstream of the removal device (4), and that the products (7) with associated packaging material (8) are transferred in multiple lanes by said gripper device to the downstream-disposed packaging device (10).

13. The high-performance packaging method according to any one of the preceding claims 1-12, **characterized in that** a length of packaging material locally covers a plurality of product flows, preferably essentially perpendicular thereto, and/or a packaging material section, before being cut off from the length of packaging material, is cut and subdivided into a plurality of strips, that provision is made of at least one, preferably two or more packaging material feeding mechanisms, in particular rolls of packaging material, per product flow, and that packaging material is preferably fed to these products at different positions in the movement direction of the product flow.

14. The high-performance packaging method according to any one of the preceding claims 1-13, **characterized in that** the products are taken out of or fed into a product infeed and at least partially packaged in a single head or in a single device preferably rotating about a stationary axis of rotation, and that products and packaging material are preferably fed to the head jointly or at staggered times.

15. The high-performance packaging method according to any one of the preceding claims 1-14, **characterized in that** the products of each product flow are essentially treated the same at first in a functionally identical or functionally similar device, that these devices are preferably driven discontinuously (intermittently) on the one hand and continuously on the other in a product flow-specific manner, or that a plurality of devices/heads adapted for continuous operation and allocated to a plurality of product flows are driven intermittently.

16. The high-performance packaging process according to one of the preceding claims 1-15, **characterized in that** the products of a product flow are transferred into another product flow, e.g., from continuous to discontinuous product processing or vice versa, in particular with heads or wheels driven intermittently or continuously in a product flow-specific manner, preferably of the same process stage.

17. A high-performance packaging mechanism for packaging in particular small-size products, preferably confectionery products such as hard or soft caramels, chocolates, or the like in a plurality of product flows (A, B) of individual products (7) undergoing processing, in particular for carrying out the method according to any one of preceding claims 1-16, comprising at least one packaging device (10), which has a plurality of packaging units consisting of product/packaging material holding means, with a product flow (A, B) of individual products (7) being allocated to each packaging unit, with simultaneous processing of the product flows,
**characterized in that**
packaging units allocated to a plurality of product flows are provided on each single rotating head or wheel, with the product flows (A, B) being guided essentially in parallel and/or in the same direction according to the principle of circles rolling on circles of cooperating heads or wheels.

18. The high-performance packaging mechanism according to claim 17, **characterized in that** a removal device (4) comprises at least one removal wheel (4a, 4b) with several sets of removal units, which are preferably capable of being pivoted about pivot axes that are parallel, in particular horizontal to the rotation axis of the removal wheel (4), with each set of these removal units being allocated to a production flow (A, B), and with the removal units preferably consisting of holding jaw pairs or vacuum cups arranged in pairs.

19. The high-performance packaging mechanism according to claim 17 or 18, **characterized in that** a removal device (4) has a plurality of removal wheels (4a, 4b), with removal units preferably pivot-mounted on each of said wheels, with the number of removal wheels (4a, 4b) corresponding to the number of product flows (A, B).

20. The high-performance packaging mechanism according to any one of preceding claims 17-19, **characterized in that** several longitudinal conveyers such as transport belts, chains, or the like are arranged upstream of the removal device and that preferably one product flow (A, B) is allocated to each longitudinal conveyer or that several product flows (A, B) are fed to the removal device (4) by at least one common longitudinal conveyor.

21. The high-performance packaging mechanism according to any one of preceding claims 17-20, **characterized by** a single lane infeed of a product flow made up of individual products and a product deflector upstream of the removal device for generating a plurality of product flows (A, B) made up of individual products through the high-performance packaging mechanism and/or a feeding of material strands (2) as product flows (A, B), from which individual products (7) are formed upstream of the removal device (4) by preferably rotating knives (5) and by cutting in a plane perpendicular to the feeding direction, which products are removed individually by each set of removal units of one or several removal wheels (4a, 4b).

22. The high-performance packaging mechanism according to any one of preceding claims 17-21, **characterized by** at least one packaging means feeding device (11) for feeding packaging material (8) to the separated products (7) either (in particular essentially radially) to the removal device (4) or to a transfer device (9) downstream thereof configured as a gripper wheel (9a, 9b), and/or with packaging material sections (8) being held adjacent to a product in the removal device, in particular in the respective removal wheel, either before or after being cut from a packaging material length, or being fed in corresponding fashion to a transfer device (9), in particular gripper wheels (9a, 9b), provided for each packaging means flow downstream of the removal device (4).

23. The high-performance packaging mechanism according to any one of preceding claims 17-22, **characterized by** a packaging device (10) capable of rotating about a rotation axis parallel to a rotation axis of the removal device (4) and/or to the rotation axis of a gripper device (9), with a set of packaging units allocated to each packaging means flow (A, B) in each case.

24. The high-performance packaging mechanism according to any one of preceding claims 17-23, **characterized in that** the packaging device (10) has a multiple lane discharge conveyor preferably configured as a delivery wheel (12) and/or a conditioning path (13), in particular a cooling or heating path, disposed downstream thereof for the airtight closure, in particular frontal sealing, of the packages.

25. The high-performance packaging mechanism according to any one of preceding claims 17-24, **characterized by** several removal devices to which several product flows, in particular product flows provided in parallel and in pairs, are allocated in each case, and by the removal devices being allocated to a packaging device that is equipped with a number of sets of packaging units, with the number of sets of packaging units corresponding to the number of packaging means flows of the removal devices.

26. The high-performance packaging mechanism according to any one of the preceding claims 17-25, **characterized by** intermittently and continuously operating devices for identical or different product flows and/or by an identical or different number of packaging devices for identical or different product flows and/or by identical or different product and/or packaging material holding elements and/or device means, of the packaging device in particular, for identical or different product flows.

27. The high-performance packaging mechanism according to any one of the preceding claims 17-26, **characterized by** a single head or by a device revolving about a stationary rotation axis for partially or fully packaging the products of several product flows.

28. The high-performance packaging mechanism according to any one of the preceding claims 17-27, **characterized by** transfer mechanisms between heads or wheels allocated to different product flows, in particular between product flow-specific product/packaging material holding means, and/or by a combination of devices such as removal, gripper, or packaging devices that are functionally identical or functionally similar but driven variably, i.e., intermittently or continuously, for different product flows.

29. The high-performance packaging mechanism according to any one of the preceding claims 17-28, **characterized in that** the product/packaging material holding units allocated to a plurality of product flows can be interconnected by means of transfer mechanisms.

30. A high-performance packaging machine comprising at least one high-performance packaging mechanism according to any one of the preceding claims 17-29.

31. A high-performance packaging machine assembly comprising at least one high-performance packaging machine according to claim 30, in particular containing a plurality of interlinked high-performance packaging machines with continuous and/or intermittent product passage through the high-performance packaging machine.

## Revendications

1. Procédé d'emballage haute performance pour l'emballage notamment de produits de petites dimensions, de préférence des sucreries, comme des caramels durs ou mous, des pralines ou similaires,
d'après lequel on fait passer les produits (7) selon une pluralité de flux de produits (A, B) à travers au moins un groupe d'emballage (1) avec au moins un dispositif d'emballage (10),
d'après lequel ledit au moins un dispositif d'emballage (10) présente une pluralité d'unités d'emballage constituées de moyens de maintien de produit/matériau d'emballage,
d'après lequel chaque unité d'emballage est affectée à un flux de produits (A, B) de produits (7) séparés individuellement,
d'après lequel on associe à chaque produit (7) à l'intérieur d'un flux de produits (A, B), une pièce de matériau d'emballage dans le groupe d'emballage (1),
et d'après lequel les produits (7) de plusieurs flux de produits sont emballés selon un processus continu et/ou intermittent, et/ou les flux de produits sont traités avec un nombre différent de dispositifs,
**caractérisé en ce que**
respectivement sur une seule tête ou roue rotative sont prévues des unités d'emballage associées à plusieurs flux de produits, **en ce que** les flux de produits (A, B) sont traités simultanément, sensiblement en parallèle et/ou dans la même direction selon le principe de cercles roulant mutuellement les uns contre les autres de têtes ou de roues coopérant mutuellement, et **en ce que** le matériau d'emballage est amené sous forme de bande de matériau d'emballage dans le groupe d'emballage (1), avec une vitesse élevée, sensiblement de manière radiale à la tête ou à la roue respective, cette bande de matériau d'emballage étant maintenue dans le groupe d'emballage (1) et un tronçon de matériau d'emballage (8) étant sectionné de celle-ci, ou bien des tronçons de matériau d'emballage (8) sont sectionnés à partir d'une nappe de matériau d'emballage avant l'introduction dans le groupe d'emballage (1), et des tronçons de matériau d'emballage (8) sont amenés dans le groupe d'emballage (1) sensiblement de manière radiale et séparément jusqu'à la tête ou la roue respective.

2. Procédé d'emballage haute performance selon la revendication 1, **caractérisé en ce que** l'on fait passer les produits (7), de préférence de manière simultanée, dans ledit au moins un groupe d'emballage, et/ou les produits sont amenés de manière simultanée au groupe d'emballage (1).

3. Procédé d'emballage haute performance selon la revendication 1 ou la revendication 2, **caractérisé en ce que** les flux de produits (A, B) du groupe d'emballage (1) sont amenés en parallèle, de préférence simultanément, et **en ce que** notamment une vitesse de déplacement des produits (7) à travers le groupe d'emballage (1) est sensiblement identique.

4. Procédé d'emballage haute performance selon l'une des revendications précédentes 1 à 3, **caractérisé par** une amenée monovoie d'un flux de produits et une subdivision de celui-ci pour former plusieurs flux de produits (A, B) traversant le groupe d'emballage, la subdivision s'effectuant de préférence en amont ou bien à l'intérieur du groupe d'emballage (1).

5. Procédé d'emballage haute performance selon l'une des revendications précédentes 1 à 4, **caractérisé en ce que** les flux de produits sont amenés au groupe d'emballage à partir d'une réserve de produits commune, notamment à partir d'un système de séparation en produits individuels, ou bien à partir de réserves de produits séparées, notamment des systèmes de séparation en produits individuels, les flux de produits (A, B) étant de préférence amenés au groupe d'emballage (1) dans la même direction ou selon des directions différentes, de préférence parallèles.

6. Procédé d'emballage haute performance selon l'une des revendications précédentes 1 à 5, **caractérisé en ce que** dans les flux de produits (A, B) sont acheminés les mêmes ou différents articles (7), et/ou ceux-ci sont emballés selon des procédés d'emballage, des types de pliage ou d'enveloppement identiques ou différents.

7. Procédé d'emballage haute performance selon l'une des revendications précédentes 1 à 6, **caractérisé en ce que** lesdits plusieurs flux de produits sont constitués chacun, à l'intérieur du groupe d'emballage (1), de produits (7) séparés individuellement, qui se trouvent, de préférence sensiblement en parallèle, de préférence dans une même étape d'emballage du procédé d'emballage.

8. Procédé d'emballage haute performance selon l'une des revendications précédentes 1 à 7, **caractérisé en ce que** les produits (7) sont amenés selon deux voies, en parallèle, à un dispositif de prélèvement (4) du groupe d'emballage (1) comprenant des moyens de réception de produit pour les produits de chacun des flux de produits (A, B), **en ce qu'**après réception des produits (7) on leur associe aussitôt un tronçon de matériau d'emballage ou bien le matériau d'emballage (8) est associé aux produits (7) seulement dans un dispositif de préhension (9) suivant, **en ce que** le produit (7) avec la pièce de matériau d'emballage est amené, selon un acheminement parallèle des flux de produits (A, B), à un dispositif d'emballage (10) du groupe d'emballage (1), qui présente des moyens de maintien de produit/de matériau d'emballage pour les produits (7) du flux de produits, et **en ce que** le produit (7) dont l'emballage est achevé est évacué du groupe d'emballage (1).

9. Procédé d'emballage haute performance selon l'une des revendications précédentes 1 à 8, **caractérisé en ce qu'**à la suite de l'emballage du produit (7), l'emballage est conditionné, notamment par voie thermique, en l'acheminant le long d'un parcours de refroidissement ou d'un parcours de chauffage pour contribuer à une fermeture étanche de l'emballage, notamment un scellage du matériau d'emballage.

10. Procédé d'emballage haute performance selon l'une des revendications précédentes 1 à 9, **caractérisé en ce que** le dispositif de prélèvement (4) reprend, à partir d'un plan de mise à disposition sensiblement horizontal, les produits (7) d'au moins deux flux de produits (A, B), qui sont amenés tout au moins sensiblement de manière parallèle et de préférence dans la même direction et notamment simultanément, et/ou **en ce que** les produits des flux de produits sont repris sensiblement simultanément par le dispositif de prélèvement, notamment qu'une pluralité de flux de produits, de préférence prévus par paires, sont amenés à une pluralité de dispositifs de prélèvement, notamment **en ce que** les produits de la pluralité de flux de produits, repris par la pluralité de dispositifs de prélèvement, sont amenés à un dispositif d'emballage commun prévu pour le traitement de tous les flux de produits amenés, ou bien sont amenés à un nombre de dispositifs d'emballage correspondant au nombre des dispositifs de prélèvement.

11. Procédé d'emballage haute performance selon l'une des revendications précédentes 1 à 10, **caractérisé en ce que** les produits (7) à l'intérieur des flux de produits (A, B) sont séparés individuellement en amont du dispositif de prélèvement (4) associé au flux de produits, les flux de produits (A, B) sont amenés de préférence au dispositif de prélèvement (4) dans des systèmes de transport longitudinal, ou bien après séparation individuelle par sectionnement d'une barre continue de pâte, et/ou **en ce que** les produits (7) sont tournés de 90° à l'intérieur du dispositif de prélèvement (4) ou après transfert à un dispositif de préhension (9).

12. Procédé d'emballage haute performance selon l'une des revendications précédentes 1 à 11, **caractérisé en ce que** le matériau d'emballage (8) est amené selon plusieurs voies, d'un nombre correspondant à celui des flux de produits (A, B), de préférence sensiblement de manière radiale, au dispositif de prélèvement (4), et est maintenu, de préférence serré, au voisinage des produits (7), notamment **en ce que** le matériau d'emballage est amené selon plusieurs voies, d'un nombre correspondant à celui des flux de produits (A, B), de préférence sensiblement de manière radiale, à un dispositif de préhension (9) prévu en aval du dispositif de prélèvement (4), et les produits (7) sont transférés avec le matériau d'emballage (8) associé, par ce dispositif de préhension, selon plusieurs voies, au dispositif d'emballage (10) agencé à la suite.

13. Procédé d'emballage haute performance selon l'une des revendications précédentes 1 à 12, **caractérisé en ce qu'**une nappe de matériau d'emballage recouvre localement une pluralité de flux de produits, de préférence sensiblement de manière transversale à ceux-ci, et/ou **en ce qu'**un tronçon de matériau d'emballage, avant son sectionnement de la nappe de matériau d'emballage est sectionné et subdivisé en une pluralité de bandes, notamment **en ce qu'**il est prévu par flux de produits, au moins un, de préférence deux ou davantage de dispositifs d'alimentation de matériau d'emballage, notamment bobines de matériau d'emballage, et **en ce que** du matériau d'emballage est de préférence amené à ces produits en des positions différentes en se référant à la direction de mouvement du flux de matériau d'emballage.

14. Procédé d'emballage haute performance selon l'une des revendications précédentes 1 à 13, **caractérisé en ce que** les produits sont acheminés ou prélevés d'une alimentation en produits, et sont emballés au moins en partie, dans une seule tête ou un seul dispositif, de préférence en rotation autour d'un axe de rotation stationnaire, et **en ce que** de préférence des produits et du matériau d'emballage sont amenés à la tête, en commun ou de manière décalée dans le temps.

15. Procédé d'emballage haute performance selon l'une des revendications précédentes 1 à 14, **caractérisé en ce que** les produits de chaque flux de produits sont tout d'abord traités sensiblement de manière identique dans un dispositif de même fonction ou un dispositif de fonction sensiblement similaire, **en ce que** de préférence ces dispositifs sont entraînés de manière spécifique selon le flux de produits, d'une part de manière discontinue (intermittente) et d'autre part de manière continue, ou bien une pluralité de dispositifs/de têtes conçus pour un fonctionnement continu, et associés à une pluralité de flux de produits, sont entraînés de manière intermittente.

16. Procédé d'emballage haute performance selon l'une des revendications précédentes 1 à 15, **caractérisé en ce que** les produits d'un flux de produits sont transférés, notamment avec des têtes ou roues entraînées de manière intermittente ou continue de façon spécifique au produit, de préférence de la même étape de procédé, dans un autre flux de produits, par exemple d'un traitement de produit continu à discontinu ou inversement.

17. Groupe d'emballage haute performance pour l'emballage notamment de produits de petites dimensions, de préférence des sucreries, comme des caramels durs ou mous, des pralines ou similaires, par traitement d'une pluralité de flux de produits (A, B) de produits (7) séparés individuellement, notamment pour la mise en oeuvre du procédé selon l'une des revendications précédentes 1 à 16, le groupe comprenant au moins un dispositif d'emballage (10), qui présente une pluralité d'unités d'emballage constituées de moyens de maintien de produit/de matériau d'emballage, un flux de produits (A, B) de produits individuels (7) séparés étant associé à chaque unité d'emballage, avec traitement simultané des flux de produits,
**caractérisé en ce que**
respectivement sur une seule tête ou roue rotative sont prévues des unités d'emballage associées à plusieurs flux de produits, les flux de produits (A, B) étant guidés, sensiblement en parallèle et/ou dans la même direction selon le principe de cercles roulant mutuellement les uns contre les autres, de têtes ou de roues coopérant mutuellement.

18. Groupe d'emballage haute performance selon la revendication 17, **caractérisé en ce qu'**un dispositif de prélèvement (4) comprend au moins une roue de prélèvement (4a, 4b) avec plusieurs jeux d'unités de prélèvement pouvant pivoter de préférence autour d'axes de pivotement parallèles à l'axe de rotation, notamment horizontal, de la roue de prélèvement (4), un jeu de ces unités de prélèvement étant respectivement associé à un flux de produits (A, B), et les unités de prélèvement étant de préférence constituées de paires de mors de maintien ou de ventouses à vide agencées par paires.

19. Groupe d'emballage haute performance selon la revendication 17 ou la revendication 18, **caractérisé en ce qu'**un dispositif de prélèvement (4) présente une pluralité de roues de prélèvement (4a, 4b) sur chacune desquelles sont montées des unités de prélèvement, de préférence de manière pivotante, le nombre des roues de prélèvement (4a,4b) correspondant au nombre des flux de produits (A, B).

20. Groupe d'emballage haute performance selon l'une des revendications précédentes 17 à 19, **caractérisé en ce qu'**en amont du dispositif de prélèvement, sont placés une pluralité de dispositifs de transport longitudinal, tels des transporteurs à bande, des chaînes ou similaires, et à chaque dispositif de transport longitudinal est de préférence associé un flux de produits (A, B), ou **en ce qu'**une pluralité de flux de produits (A, B) sont amenés au dispositif de prélèvement (4) par au moins un dispositif de transport longitudinal commun.

21. Groupe d'emballage haute performance selon l'une des revendications précédentes 17 à 20, **caractérisé par** une amenée monovoie voie d'un flux de produits constitué de produits individuels, et par un aiguillage de produits en amont du dispositif de prélèvement pour générer une pluralité de flux de produits (A, B) de produits individuels à travers le groupe d'emballage haute performance, et/ou par l'acheminement de barres continues de pâte (2) en tant que flux de produits (A, B), à partir desquelles sont formés, en amont du dispositif de prélèvement (4), par des lames de coupe (5) de préférence rotatives et par un traitement de sectionnement dans un plan perpendiculaire à la direction d'amenée, des produits individuels (7), qui, séparés individuellement, sont prélevés respectivement par un jeu d'unités de prélèvement d'une ou de plusieurs roues de prélèvement (4a, 4b).

22. Groupe d'emballage haute performance selon l'une des revendications précédentes 17 à 21, **caractérisé par** au moins un dispositif d'alimentation de moyen d'emballage (11) pour l'amenée de matériau d'emballage (8) aux produits (7) ayant été individuellement séparés, notamment sensiblement de manière radiale, soit au dispositif de prélèvement (4), soit à un dispositif de transfert (9) réalisé sous la forme d'une roue de préhension (9a, 9b), et/ou en ce que des tronçons de matériau d'emballage (8) sont, dans le dispositif de prélèvement, notamment la roue de prélèvement respective, soit avant ou après être sectionnés d'une nappe de matériau d'emballage, maintenus au voisinage d'un produit ou amenés de manière correspondante à un dispositif de transfert (9) prévu pour chaque flux de moyen d'emballage, notamment des roues de préhension (9a, 9b), en aval du dispositif de prélèvement (4).

23. Groupe d'emballage haute performance selon l'une des revendications précédentes 17 à 22, **caractérisé par** un dispositif d'emballage (10) pouvant tourner autour d'un axe de rotation parallèle à un axe de rotation du dispositif de prélèvement (4) et/ou à l'axe de rotation d'un dispositif de préhension (9), avec chacun un jeu d'unités d'emballage associé à chaque flux de moyen d'emballage (A, B).

24. Groupe d'emballage haute performance selon l'une des revendications précédentes 17 à 23, **caractérisé en ce qu'**au dispositif d'emballage (10) sont associés un dispositif de transport d'évacuation à plusieurs voies, de préférence sous la forme d'une roue d'évacuation (12), et/ou, en aval de celui-ci, un parcours de conditionnement (13), notamment un parcours de refroidissement ou de chauffage pour assurer une fermeture étanche des emballages, notamment pour un scellage frontal.

25. Groupe d'emballage haute performance selon l'une des revendications précédentes 17 à 24, **caractérisé par** une pluralité de dispositifs de prélèvement, auxquels sont associés respectivement une pluralité de flux de produits, notamment des flux de produits parallèles et prévus par paires, et les dispositifs de prélèvement sont associés à un dispositif d'emballage, qui est équipé d'un certain nombre de jeux d'unités d'emballage, le nombre des jeux d'unités d'emballage correspondant au nombre des flux de moyen d'emballage des dispositifs de prélèvement.

26. Groupe d'emballage haute performance selon l'une des revendications précédentes 17 à 25, **caractérisé par** des dispositifs travaillant de manière intermittente et continue pour des flux de produits identiques ou différents, et/ou un nombre identique ou différent de dispositifs actifs pour l'emballage pour des flux de produits identiques ou différents, et/ou des éléments de maintien de produit et/ou de matériau d'emballage identiques ou différents, et/ou des moyens de dispositif, notamment du dispositif d'emballage pour des flux de produits identiques ou différents.

27. Groupe d'emballage haute performance selon l'une des revendications précédentes 17 à 26, **caractérisé par** une seule tête ou un dispositif en révolution autour d'un axe de rotation stationnaire, pour l'emballage partiel ou complet des produits de plusieurs flux de produits.

28. Groupe d'emballage haute performance selon l'une des revendications précédentes 17 à 27, **caractérisé par** des dispositifs de transfert entre des têtes ou roues associées à différents flux de produits, notamment entre des moyens de maintien de produit/de matériau d'emballage spécifiques au flux de produits, et/ou par une combinaison de dispositifs de fonction identique ou de fonctions similaires, mais entraînés différemment de manière intermittente et continue pour différents flux de produits, comme des dispositifs de prélèvement, de préhension ou d'emballage.

29. Groupe d'emballage haute performance selon l'une des revendications précédentes 17 à 28, **caractérisé en ce que** les unités de maintien de produit/de matériau d'emballage associées à une pluralité de flux de produits, peuvent être reliées les unes aux autres par des dispositifs de transfert.

30. Machine d'emballage haute performance comprenant au moins un groupe d'emballage haute performance selon l'une des revendications précédentes 17 à 29.

31. Agencement de machines d'emballage haute performance comprenant au moins une machine d'emballage haute performance selon la revendication 30, englobant notamment une pluralité de machines d'emballage haute performance mutuellement interconnectées, avec un passage continu ou intermittent des produits à travers la machine d'emballage haute performance.
